# EUROPÄISCHE PATENTSCHRIFT

(11) **EP 4 094 884 B1**
(45) Veröffentlichungstag und Bekanntmachung des Hinweises auf die Patenterteilung: **28.10.2026**
(21) Anmeldenummer: 22174060.8
(22) Anmeldetag: 18.05.2022
(51) Int. Cl.: B23Q 7/04, B23Q 7/10, B23Q 11/08, B23Q 37/00

(54) **FERTIGUNGSSYSTEM UND ANLAGE MIT EINEM SOLCHEN SYSTEM**
MACHINING SYSTEM AND INSTALLATION WITH SUCH A SYSTEM
SYSTÈME D'USINAGE ET INSTALLATION AVEC UN TEL SYSTÈME

(30) Priorität: 28.05.2021 DE 102021113890
(43) Veröffentlichungstag der Anmeldung: 30.11.2022
(73) Patentinhaber: CHIRON Group SE, 78532 Tuttlingen (DE)
(72) Erfinder: Vuadens, Samuel, 1925 Finhaut (CH); Maret, Dylan, 1920 Martigny (CH); Mettan, Blaise, 1902 Evionnaz (CH); Cheseaux, Mathieu, 1913 Saillon (CH)
(74) Vertreter: Witte, Weller & Partner Patentanwälte mbB

(56) Entgegenhaltungen:
- EP-A1- 3 398 711
- DE-A1- 102004 031 929
- DE-A1- 102011 000 107
- DE-A1- 102015 206 914
- DE-U1- 202005 012 039
- DE-U1- 202010 000 754
- DE-U1- 202013 008 677
- DE-U1- 202017 102 297
- DE-U1- 202019 003 026
- US-A1- 2006 270 540
- US-A1- 2020 316 775

## Beschreibung

Die vorliegende Offenbarung befasst sich allgemein mit der feinmechanischen Fertigung mittels Werkzeugmaschinen. Die vorliegende Offenbarung bezieht sich gemäß bestimmten Ausgestaltungen auf ein Fertigungssystem für die spanende Fertigung. Gemäß weiteren Ausgestaltungen bezieht sich die vorliegende Offenbarung auf eine kombinierte Transfer- und Speichervorrichtung für die spanende Fertigung. Ferner bezieht sich die vorliegende Offenbarung auf eine Anlage zur spanenden Fertigung, die eine kombinierte Transfer- und Speichervorrichtung und ein Fertigungssystem aufweist.

Aus der DE 10 2015 206 914 A1 ist eine Fertigungszelle bekannt, die eine Werkzeugmaschine sowie eine Werkzeugwechselvorrichtung und eine Werkstückwechselvorrichtung umfasst, die an einander gegenüberliegenden Seiten an einen Arbeitsraum der Werkzeugmaschine angekoppelt sind. Die Werkstückwechselvorrichtung umfasst einen Palettenwechsler mit einem drehbaren Doppelträger für Paletten, der auf einem Linearschlitten angeordnet ist und in Bezug auf den Arbeitsraum entlang einer bodenseitigen Führung zwischen einer angenäherten und einer entfernten Position linear verfahrbar ist.

Aus der US 2016/0325400 A1 ist eine Roboterzelle mit einem hängenden Roboter bekannt, mit dem innerhalb der Roboterzelle Werkstücke bearbeitet werden können. Konkret erfolgt die Bearbeitung mittels Schleifen an insgesamt drei Schleifplätzen innerhalb der Roboterzelle. Aus der JP 2011-224663 A ist eine Roboterzelle mit einem hängenden Roboter bekannt, dessen Bewegungsbereich an einen Arbeitsbereich innerhalb der Roboterzelle angepasst ist, um im Arbeitsbereich innerhalb der Roboterzelle Werkstücke zu bearbeiten.

Das Video "FANUC RoboDrill Twin Cell Demo" (www.youtube.com/watch? v=b1udXFGC5mU) zeigt eine Anordnung mit einem hängenden Roboter, der Bauteile zwischen verschiedenen Stationen transferiert. Der Roboter ist zwischen zwei Zellen angeordnet, der Materialstrom in die Anordnung hinein und aus der Anordnung heraus erfolgt über zwei Bänder, die an voneinander abgewandten Seiten an einen Arbeitsraum des Roboters ankoppeln.

Gemäß verschiedenen Aspekten bezieht sich die vorliegende Offenbarung auf kompakt gestaltete Werkzeugmaschinen sowie deren Integration in Fertigungssysteme und Anlagen zur spanenden Fertigung. Kompakt gestaltete Werkzeugmaschinen sind beispielsweise solche mit einem Arbeitsraum, der kleiner als 250 mm x 250 mm x 250 mm ist.

In beispielhaften Ausgestaltungen ist der Arbeitsraum der Werkzeugmaschine kleiner als 200 mm x 200 mm x 200 mm. In beispielhaften Ausgestaltungen ist der Arbeitsraum der Werkzeugmaschine kleiner als 150 mm x 150 mm x 150 mm. In beispielhaften Ausgestaltungen ist der Arbeitsraum der Werkzeugmaschine kleiner als 100 mm x 100 mm x 100 mm. In beispielhaften Ausgestaltungen ist der Arbeitsraum der Werkzeugmaschine kleiner als 75mm x 75 mm x 75 mm. Diese Angaben betreffen insbesondere die möglichen Vorschübe (Verfahrwege) entlang der X, Y sowie der Z-Achse. Der Arbeitsraum kann würfelförmig gestaltet sein. Es sind jedoch auch quaderförmige Bauräume denkbar, deren Verfahrwege in X, Y sowie Z nicht einheitlich sind.

Beispielhaft eignen sich derartig gestaltete Werkzeugmaschinen für die feinmechanische Bearbeitung, beispielsweise im Rahmen der Herstellung von Uhren, Schmuck und ähnlichem. Es versteht sich, dass auch andere Anwendungen denkbar sind. Beispielsweise handelt es sich bei den Werkstücken um Ronden für Uhren und ähnliche feinmechanische Produkte. Beispielhaft handelt es sich um Uhrenplatinen, Bodenplatten, Zahnräder, Ziffernblätter, Brücken, Kloben, Abdeckungen und Gehäuseteile für Uhren sowie vergleichbare flache Teile.

Werkzeugmaschinen und Anlagen zur spanenden Fertigung sind bekannt. Aus der US 2019/0084102 A1 ist eine Fertigungsanlage bekannt, die eine Mehrzahl übereinander und nebeneinander angeordneter kompakt gestalteter Werkzeugmaschinen aufweist, die in einer gemeinsamen Einhausung angeordnet sind, wobei zusätzlich ein Roboter für den Werkzeugwechsel und/oder Werkstückwechsel vorgesehen ist, der horizontal verfahrbar auf einem vertikal verfahrbaren Balken angeordnet ist.

Aus der EP 2 227 349 B1 ist eine bewegliche Roboterzelle mit Gehäuse bekannt, die bedarfsweise vor eine Öffnung zu einem Arbeitsraum einer Bearbeitungsmaschine platzierbar ist, um mit einem Roboter Werkstücke laden zu können.

Aus der EP 2 036 664 A1 ist eine Bearbeitungsanlage für Werkstücke bekannt, mit wenigstens einer Bearbeitungsmaschine, mit einer zumindest ein Regalmagazin aufweisenden Schutzeinhausung und mit einer innerhalb der Schutzeinhausung angeordneten Ladeeinrichtung zum Be- und Entladen der Bearbeitungsmaschine, wobei die Ladeeinrichtung einen entlang einer Führung verfahrbaren Schlitten mit einem verstellbaren Ausleger umfasst, der zumindest eine Handhabungseinheit für handzuhabende Teile trägt, wobei die Führung für den Schlitten in einem Überkopfbereich vorgesehen ist, und wobei der auf der Schlittenunterseite angelenkte Ausleger der Ladeeinrichtung zwei miteinander gekoppelte Arme aufweist, die zueinander verschwenkbar sind.

Aus der DE 35 43 209 A1 ist ein Fertigungssystem zur flexiblen Fertigung von Werkstücken bekannt, das mehrere Werkzeugmaschinen, ein die Werkzeugmaschinen verbindendes Transportsystem für Werkstücke und ein Beschickungsgerät für jede Werkzeugmaschine aufweist, das zwischen der Werkzeugmaschine und dem Transportsystem angeordnet und zum Beladen und Entladen der Werkzeugmaschine ausgebildet ist.

Aus der DE 10 2014 114 258 A1 ist eine Anordnung bekannt, die eine Einzelplatz-Zerspanungsmaschine und eine Roboterzelle umfasst, wobei die Roboterzelle zum Beladen und Entladen der Zerspanungsmaschine an diese ankoppelbar ist, wobei die Zerspanungsmaschine einen Maschinenraum und die Roboterzelle einen Roboterzellenraum aufweist, und wobei im angekoppelten Zustand der Roboterzelle der Maschinenraum und der Roboterzellenraum einen gemeinsamen Bearbeitungsraum bilden.

Es hat sich gezeigt, dass beispielhaft mit einer kompakt gestalteten Werkzeugmaschine auch bei relativ geringen Außenabmessungen der Werkzeugmaschine die gewünschten Bauteile mit hoher Präzision und Effizienz gefertigt werden können.

Es hat sich jedoch auch gezeigt, dass unter Automatisierungsaspekten bei kompakt gestalteten Werkzeugmaschinen besondere Randbedingungen zu berücksichtigen sind. Zum einen können Transfersysteme, Handhabungseinheiten und Ähnliches nicht beliebig kompakt gestaltet werden. Selbst wenn dies technologisch möglich wäre, so gibt es in der Praxis häufig bestimmte Mindestabmessungen für Transfersysteme, Handhabungseinheit, Roboter, Greifer und ähnliches.

Dies führt unter Umständen dazu, dass die eigentliche Werkzeugmaschine (bzw. deren Arbeitsraum) klein in Relation zur Automatisierungstechnik (Handhabungstechnik, Transfersysteme und Ähnliches) ist.

Ferner muss die Automatisierungstechnik (beispielsweise Roboter mit Greifer und Ähnliches) mit der Werkzeugmaschine im Bauraum (gegebenenfalls Arbeitsraum) der Werkzeugmaschine interagieren, um eine Übergabe von Werkstücken und gegebenenfalls Werkzeugen zu ermöglichen.

Ferner hat sich gezeigt, dass auch bei kompakt gestalteten Werkzeugmaschinen häufig der Wunsch für die Möglichkeit zur direkten visuellen Überwachung durch den Bediener besteht. Ähnlich wie bei Werkzeugmaschinen größerer Bauart werden regelmäßig Zugangsöffnungen (Türen) mit Scheiben gefordert. Dies führt in einer automatisierten Anlage dazu, dass dieser Bereich ("Vorderseite" der Werkzeugmaschine) gerade nicht für die Automatisierungstechnik zur Verfügung steht.

Ferner hat sich gezeigt, dass kompakt gestaltete Werkzeugmaschinen häufig klein im Verhältnis zu marktüblicher Automatisierungstechnik gestaltet sind. Dies resultiert in spezifischen Anforderungen für die Automatisierung kompakt gestalteter Werkzeugmaschinen. Ferner ergeben sich neue Möglichkeiten für die Automatisierung und Verkettung, die gegebenenfalls mit konventionellen Werkzeugmaschinen nicht umsetzbar waren.

Der vorliegenden Offenbarung liegt die Aufgabe zugrunde, Lösungen für die Bearbeitung, insbesondere die feinmechanische Bearbeitung, mittels kompakt gestalteter Werkzeugmaschinen anzugeben. Dies bezieht sich in bestimmten Ausgestaltungen auf die Automatisierung der Bearbeitung, beispielsweise auf Handhabungszellen und dergleichen, um die besonderen Bedingungen bei kompakt gestalteten Werkzeugmaschinen zu berücksichtigen. Insgesamt sollen sich Fertigungssysteme realisieren lassen, die auch bei nur kleinen Bauräumen eine teilautomatisierte oder gar hochautomatisierte Fertigung ermöglichen. Dies bezieht sich beispielhaft auf den Werkstückwechsel. In bestimmten Ausgestaltungen bezieht sich dies auf den Werkzeugwechsel. Gemäß einem weiteren Aspekt soll im Rahmen der vorliegenden Offenbarung eine kombinierte Transfer- und Speichervorrichtung angegeben werden, die mit zumindest einem eine Werkzeugmaschine umfassenden Fertigungssystem kombinierbar ist. Auf diese Weise soll eine effiziente und zumindest teilautonome Fertigung mittlerer und großer Serien ermöglicht werden.

Schließlich soll im Rahmen der vorliegenden Offenbarung eine Fertigungsanlage angegeben werden, die ein mit einer Handhabungszelle versehenes Fertigungssystem vorteilhaft mit einer kombinierten Transfer- und Speichervorrichtung verknüpft. Im Rahmen der vorliegenden Offenbarung sollen ferner Ansätze zur Verkettung und Automatisierung kompakt gestalteter Werkzeugmaschinen beschrieben werden.

Gemäß einem Aspekt bezieht sich die vorliegende Offenbarung auf ein Fertigungssystem für die spanende Fertigung, insbesondere zur Herstellung feinmechanischer Werkstücke, das Folgendes aufweist:
- zumindest eine insbesondere kompakt gestaltete Werkzeugmaschine, die zur Mehrachsbearbeitung ausgebildet ist, und die einen Werkzeughalter und einen Werkstückhalter aufweist, die relativ zueinander in vier oder fünf Achsen verfahrbar sind, wobei drei translatorische Achsen und eine oder zwei rotatorische Achsen vorgesehen sind,
   wobei der Werkzeughalter und der Werkstückhalter an einer Rückseite eines Arbeitsraums der Werkzeugmaschine angeordnet sind,
- eine Handhabungszelle, die Folgendes aufweist:
   - eine erste Schnittstelle zur Werkzeugmaschine, die seitlich an den Arbeitsraum ankoppelt,
   - eine zweite Schnittstelle für Transferzwecke,
   - eine Handhabungseinheit, insbesondere in Form eines Handhabungsroboters, und
   - zumindest einen Pufferspeicher,

   wobei die Handhabungseinheit für einen automatisierten Werkstückwechsel ausgebildet ist,
   wobei die Handhabungseinheit als hängender Knickarm-Roboter ausgebildet ist, dessen Bewegungsbereich die erste Schnittstelle, eine Werkstückübergabeposition mit dem Werkstückhalter und die zweite Schnittstelle umfasst, und wobei der durch die möglichen Verfahrwege der drei translatorischen Achsen definierte Arbeitsraum der Werkzeugmaschine kleiner als 250 mm x 250 mm x 250 mm ist.

Auf diese Weise kann die Werkzeugmaschine zumindest teilautomatisiert betrieben werden. Dies umfasst, dass beispielsweise Werkstücke teilautomatisch oder vollautomatisch gewechselt werden können.

Die Handhabungszelle ist zum Arbeitsraum der Werkzeugmaschine benachbart, beispielsweise mit einem geringen Abstand seitlich hierzu angeordnet. Die Handhabungseinheit ist der Handhabungszelle und nicht der Werkzeugmaschine zugeordnet. Dies heißt, dass bei der Werkzeugmaschine, die nur einen verhältnismäßig kleinen Arbeitsraum aufweist, keine aufwändigen Eingriffe und Anpassungen erforderlich sind.

Die Vorderseite des Arbeitsraums ist daher zumindest in beispielhaften Ausgestaltungen frei und für einen Bediener einsehbar und zugänglich. Die Vorderseite kann auch als Bedienerseite bezeichnet werden. Die Vorderseite ist der Rückseite gegenüberliegend angeordnet. Seitliche Seiten des Arbeitsraums stehen für die Handhabung (Werkstückwechsel, Werkzeugwechsel) zur Verfügung. Auf diese Weise wird der kompakten Bauart Rechnung getragen.

Die Handhabungseinheit kann den Werkstückhalter und eine gegebenenfalls dort bereits angeordnete Palette anfahren, um dort einen Werkstückwechsel (Beladen und Entladen) vorzunehmen. Dies kann auch die Entnahme von Reststücken (Abfall) betreffen.

In einer beispielhaften Ausgestaltung ist der Werkzeughalter als Werkzeugspindel gestaltet und mit einer vertikal orientierten Achse versehen. Der Werkstückhalter ist beispielsweise einer Schwenkachse bzw. einem Schwenktisch der Werkzeugmaschine zugeordnet.

Die erste Schnittstelle kann auch als Ladeschnittstelle bezeichnet werden. Die zweite Schnittstelle kann auch als Transferschnittstelle bezeichnet werden.

Über die zweite Schnittstelle kann die Handhabungszelle und folglich das Fertigungssystem mit einer Transfervorrichtung oder einer kombinierten Transfer- und Speichervorrichtung gekoppelt werden. Mit anderen Worten kann die Handhabungseinheit mit weiterer Handhabungstechnik/Transfertechnik zusammenarbeiten, um dem Pufferspeicher der Handhabungszelle Werkstücke zuzuführen bzw. von diesem abzuführen. Dies geschieht beispielsweise blockweise in Trays oder dergleichen.

Die Handhabungszelle kann als Schleuse zwischen der Werkzeugmaschine (bzw. deren Arbeitsraum) und einem Transfersystem dienen. Die Grundstruktur der Werkzeugmaschine, insbesondere die mechanische Grundstruktur, bleibt in einer beispielhaften Ausgestaltung weitgehend oder vollständig unberührt, wenn die Werkzeugmaschine mit der Handhabungszelle gekoppelt wird. Dies erlaubt eine Nutzung der Werkzeugmaschine in Anlagen und Systemen mit unterschiedlichem Automatisierungsgrad. Die Handhabungszelle kann auch als Handhabungsmodul bezeichnet werden.

In einer beispielhaften Ausgestaltung steht der Arbeitsraum der Maschine primär, zumindest überwiegend, gegebenenfalls sogar ausschließlich, für die spanabhebende Bearbeitung zur Verfügung. Mit anderen Worten wird der Arbeitsraum gemäß einer beispielhaften Ausgestaltung zumindest während der spanabhebenden Bearbeitung nicht von Handhabungstechnik und ähnlichem beansprucht. Auch dadurch wird dem beengten Bauraum Rechnung getragen.

Es hat sich gezeigt, dass kompakt gestaltete Werkzeugmaschinen auch bei einem kleinen Bauraum für die präzise Fertigung spezifischer feinmechanischer Bauteile, beispielsweise Uhrenplatinen, geeignet sind. Die erforderliche Genauigkeit lässt sich beispielsweise dadurch gewährleisten, dass Verfahrwege nur recht begrenzt sind und Gestaltelemente wie Auskragungen nur geringe Abmessungen aufweisen. Dies führt insgesamt zu einer geringen Verformungsneigung und folglich zu einer hohen Präzision trotz kompakter Gestaltung. Die kompakte Gestaltung muss jedoch bei der Automatisierung berücksichtigt werden.

Gemäß einer beispielhaften Ausgestaltung des Fertigungssystems stellt die Handhabungseinheit eine Primärfunktion und zumindest eine Sekundärfunktion bereit, wobei die Primärfunktion einen Werkstückwechsel umfasst, und wobei die Sekundärfunktion einen Werkzeugwechsel umfasst.

Mit anderen Worten kann die Handhabungszelle zumindest in beispielhaften Ausgestaltungen auch für den Werkzeugwechsel genutzt werden. Es handelt sich zumindest gemäß einer beispielhaften Ausgestaltung dabei jedoch nur um eine Sekundärfunktion, also um eine gegenüber dem Werkstückwechsel nachrangige Funktion. Gleichwohl erweitert die Bereitstellung einer Primärfunktion und einer Sekundärfunktion das Anwendungsspektrum der Handhabungszelle.

Die Handhabungseinheit ist als hängender Knickarm-Roboter ausgebildet, dessen Bewegungsbereich die erste Schnittstelle, eine Werkstückübergabeposition mit dem Werkstückhalter und die zweite Schnittstelle umfasst. Mit anderen Worten kann die Handhabungseinheit als Industrie-Roboter gestaltet sein, beispielsweise als hängend angeordneter Industrie-Roboter.

Die Handhabungseinheit ist hängend angeordnet. Auf diese Weise kann etwa der Bodenbereich der Handhabungszelle anderweitig genutzt werden.

Gemäß einer weiteren beispielhaften Ausgestaltung des Fertigungssystems weist die Handhabungseinheit einen Doppelgreifer auf, der zumindest zum Greifen von Rohlingen ausgebildet ist. Auf diese Weise können Rohlinge effizient in die Werkzeugmaschine eingewechselt werden, wobei dies ohne großen Zeitverzug mit einer Entnahme des vorherigen Werkstücks kombinierbar ist. Mit einem Doppelgreifer lassen sich Werkstückwechselzeiten reduzieren.

Die Werkzeugmaschine ist beispielhaft in einer Bearbeitungszelle angeordnet, die der Handhabungszelle benachbart ist. Die Handhabungseinheit überlappt in einer beispielhaften Ausgestaltung mit ihrem Bewegungsbereich den Arbeitsraum der Werkzeugmaschine, zumindest abschnittsweise, so dass ein Beladevorgang und gegebenenfalls auch ein Entladevorgang möglich ist. Auf diese Weise können Rohlinge an den Werkstückhalter übergeben werden. Dies kann eine Übergabe der Rohlinge an eine Palette oder Spannvorrichtung umfassen, die am Werkstückhalter angeordnet oder als Bestandteil des Werkstückhalters ausgebildet ist.

In einer weiteren Ausgestaltung ist der Doppelgreifer auch dazu ausgebildet, bearbeitete Teile zu greifen. Dies umfasst in einer beispielhaften Ausgestaltung Werkstücke, die von einem umgebenden Reststück des Rohlings getrennt sind. In einer weiteren Ausgestaltung umfasst dies bearbeitete Werkstücke, die noch mit dem Reststück des Rohlings verbunden sind.

In einer weiteren beispielhaften Ausgestaltung ist der Doppelgreifer dazu ausgebildet, Reststücke zu greifen, die sich nach dem Trennen des Werkstücks vom Rohling ergeben. Solche Reststücke werden beispielhaft als Butzen bezeichnet. Die Werkstücke sind beispielhaft rondenartig, scheibenartig, oval oder eckig gestaltet und werden als Ausschnitt aus dem Rohling erzeugt, wobei gegebenenfalls ein Reststück übrigbleibt.

Je nachdem, ob die Werkstücke vollständig vom Reststück des Rohlings getrennt werden, kann die Handhabungseinheit Werkstücke ohne Reststück, noch mit dem Reststück verbundene Werkstücke oder vom Werkstück getrennte Reststücke übernehmen und abführen. Wenn ein Doppelgreifer vorgesehen ist, kann ohne großen Verzug ein neuer Rohling am Werkstückhalter platziert werden.

Gemäß einer weiteren beispielhaften Ausgestaltung des Fertigungssystems umfasst der Pufferspeicher zumindest eine Auflage für einen Werkstückträger mit einer Mehrzahl von Speicherplätzen, die zumindest zur Aufnahme von Rohlingen ausgebildet sind. Der Werkstückträger ist beispielhaft als Tablar oder Werkstückpalette zur Aufnahme einer Mehrzahl von Werkstücken bzw. Rohlingen ausgebildet. In einer beispielhaften Ausgestaltung ist der Werkstückträger auch zur Aufnahme bearbeiteter Werkstücke oder von Reststücken ausgebildet.

Der Werkstückträger kann auch als Tray gestaltet und bezeichnet werden. Der Werkstückträger kann über die zweite Schnittstelle bereitgestellt werden. Dies kann beispielhaft über ein Transfersystem erfolgen. Es ist jedoch auch eine manuelle Beschickung vorstellbar, gegebenenfalls maschinenunterstützt.

Sofern Werkstückträger vorgesehen sind, die eine Mehrzahl oder Vielzahl von Werkstücken (bzw. Rohlingen und/oder Reststücken) aufnehmen können, lassen sich die vergleichsweise filigranen Werkstücke effizient handhaben und transferieren. Der Transfer kann beispielhaft zwischen einer Speicherebene einer kombinierten Transfer- und Speichervorrichtung und der Werkzeugmaschine erfolgen, wobei der Transfer durch die Handhabungszelle hindurch erfolgt. Dies erlaubt einen effizienten Transfer einer Vielzahl von Teilen, die vom Werkstückträger gehalten werden. Wenn dieser (globale) Transfer unter Verwendung von Werkstückträger erfolgt, können die einzelnen Werkstücke schnell und sicher bewegt werden. Ferner vereinfacht sich eine Speicherung oder Zwischenspeicherung, dies kann bedarfsweise auch direkt im (transportablen) Werkstückträger erfolgen. Es ist für die Handhabung der Werkstückträger nicht zwingend die Genauigkeit und Sorgfalt zu beachten, die bei der Handhabung der Werkstücke als solches zu beachten wäre.

Die Handhabungszelle erlaubt wiederum die Vereinzelung der Werkstücke. Dieser (lokale) Transfer kann unter Berücksichtigung der Genauigkeitsanforderungen sowie der möglichen Fragilität der Werkstücke erfolgen. Zu diesem Zweck kann die Handhabungszelle ferner ein Referenzteil aufweisen, das beispielsweise einen definierten Anschlag für einen Rohling des Werkstücks aufweist. Dadurch kann das Werkstück am Referenzteil gezielt ausgerichtet werden. Auf diese Weise verringern sich die Anforderungen an die Genauigkeit der Ausrichtung der Werkstücke im Werkstückträger.

Gemäß einer weiteren beispielhaften Ausgestaltung des Fertigungssystems sind zumindest ein erster Werkstückträger zur Bereitstellung von Rohlingen und ein zweiter Werkstückträger zur Aufnahme von bearbeiteten Werkstücken oder von Reststücken vorgesehen, die gemeinsam in der Handhabungszelle aufnehmbar sind. Auf diese Weise kann die Handhabungszelle selbst einen Pufferspeicher bereitstellen. Die Handhabungszelle kann zumindest für eine bestimmte Anzahl von Werkstücken autonom oder teilautonom betrieben werden, ohne dass ein zusätzlicher Transfer über die Transferschnittstelle erforderlich ist.

In einer beispielhaften Ausgestaltung sind die Werkstückträger in der Handhabungszelle im Bewegungsbereich der Handhabungseinheit angeordnet. Es können beispielsweise zwei Tablare oder zwei Werkstückpaletten genutzt werden, wobei ein erster Werkstückträger für Rohteile und ein zweiter Werkstückträger für bearbeitete Teile vorgesehen ist. Die Handhabungszelle kann entsprechende Auflagen für die Werkstückträger aufweisen.

Gemäß einer weiteren beispielhaften Ausgestaltung weist das Fertigungssystem ferner zumindest einen Hilfsspeicher auf, der insbesondere zur Speicherung von Stichproben ausgebildet ist. Der Hilfsspeicher kann auch als Quarantänespeicher gestaltet sein.

Beispielsweise lässt sich der Hilfsspeicher für die Zwischenspeicherung von Werkstücken nutzen, für die Messungen oder ähnliche Maßnahmen zur Qualitätsüberwachung vorgesehen sind. In ähnlicher Weise lässt sich der Hilfsspeicher auch als Puffer für potentielle Schlecht-Teile nutzen, die gegebenenfalls nach Prüfung als Gut-Teile freigegeben werden. Die Handhabung der zwischengespeicherten Teile kann innerhalb der Handhabungszelle erfolgen.

Gemäß einer weiteren beispielhaften Ausgestaltung des Fertigungssystems weist die Handhabungseinheit einen Sauggreifer auf, der insbesondere zur Aufnahme bearbeiteter Werkstücke ausgebildet ist. Beispielhaft ist die Handhabungseinheit dazu ausgebildet, zwischen einem mechanischen Greifer (mit Greiferfingern oder Klemmen) und einem Sauggreifer (fluidischer Greifer) zu wechseln. Bei einem Doppelgreifer ist grundsätzlich auch eine Kombination aus mechanischem Greifer und Sauggreifer vorstellbar.

Ein Sauggreifer erlaubt die Handhabung fragiler Werkstücke. Auf diese Weise können beispielsweise vollständig vom Reststück des Rohlings getrennte Werkstücke schonend aus dem Arbeitsraum abgeführt werden.

Gemäß einer weiteren beispielhaften Ausgestaltung des Fertigungssystems weist die Handhabungszelle ferner eine Überwachungsstation auf, beispielsweise eine optische Überwachungsstation. Auf diese Weise kann eine fertigungsnahe Überwachung erfolgen. Dies hat den Vorteil, dass Werkstücke bereits geprüft werden können, bevor sie zurück in die (globale) Transfer- und Speichervorrichtung gelangen. Eine Überwachungsstation in der Handhabungszelle kann mit einem Hilfsspeicher in der Handhabungszelle kombiniert werden.

Gemäß einer weiteren beispielhaften Ausgestaltung weist das Fertigungssystem ferner zumindest ein Referenzteil zur Ausrichtung von Werkstücken auf, insbesondere zur Zentrierung. Auf diese Weise können beispielsweise die Rohlinge zentriert werden. Dies erlaubt die Verwendung von Ladehilfsmitteln mit einer reduzierten Anforderung an die Positioniergenauigkeit.

Mit anderen Worten kann die Handhabungseinheit beispielsweise einen Rohling zunächst vom Werkstückträger (zum Beispiel Tablar) greifen und anschließend am Referenzteil platzieren, um den Rohling auszurichten und gegebenenfalls zu zentrieren. Auf diese Weise lassen sich Positionierfehler beim Beladen und Entladen der Werkzeugmaschine reduzieren.

Gemäß einer weiteren beispielhaften Ausgestaltung des Fertigungssystems ist zumindest die erste Schnittstelle zwischen der Werkzeugmaschine und der Handhabungszelle mit einer Tür verschließbar, insbesondere durch eine Schiebetür. Beispielhaft ist die Tür nach Art einer Guillotine, also als vertikal verfahrbare Schiebetür, gestaltet. Andere Schließvorrichtungen sind vorstellbar.

Die Tür erlaubt eine hermetische Trennung zwischen dem Arbeitsraum und der Handhabungszelle während der Bearbeitung. Dies ist auch deshalb möglich, weil die Handhabungseinheit der Handhabungszelle während der Bearbeitung den Arbeitsraum der Werkzeugmaschine nicht beansprucht, sondern lediglich bedarfsweise für den Werkstückwechsel herangeführt wird. In einer beispielhaften Ausgestaltung ist die Handhabungseinheit der Handhabungszelle während der Bearbeitung vollständig aus der Bearbeitungszelle herausgefahren.

Die Gestaltung als vertikal verfahrbare Tür gestattet die Zugänglichkeit der jeweiligen Vorderseiten (Bedienerseite) der Handhabungszelle sowie der Bearbeitungszelle. Beispielhaft kann die Tür im geöffneten Zustand in einen Bereich (oberhalb oder unterhalb der Schnittstelle) einfahren, der nicht anderweitig genutzt wird und die freie Sicht des Bedieners nicht stört. Auch die zweite Schnittstelle kann mit einer derartigen Schiebetür oder in anderer Weise mit einer Schließvorrichtung versehen sein.

Gemäß einer weiteren beispielhaften Ausgestaltung weist das Fertigungssystem ferner eine Rüstzelle mit einem Handhabungsmanipulator auf, insbesondere in Form eines Rüstroboters, wobei die Rüstzelle und die Handhabungszelle an einander gegenüberliegenden Seiten an den Arbeitsraum der Werkzeugmaschine angekoppelt sind. Die Rüstzelle kann auch als Rüstmodul bezeichnet werden.

Die Werkzeugmaschine weist gemäß diesem Ausführungsbeispiel auf einer ersten Seite eine Schnittstelle zur Handhabungszelle und auf einer zweiten Seite, insbesondere gegenüberliegend zur ersten Seite, eine weitere Schnittstelle zur Rüstzelle auf. Mit anderen Worten ist die Werkzeugmaschine bzw. die Bearbeitungszelle in einer beispielhaften Ausgestaltung zwischen der Rüstzelle und der Handhabungszelle angeordnet.

Auf diese Weise bleibt die Vorderseite frei und einsehbar. Auch die Schnittstelle zwischen der Werkzeugmaschine und der Rüstzelle kann mit einer Tür versehen sein, beispielsweise einer Schiebetür, insbesondere in Form einer vertikal verfahrbaren Tür (Guillotine). Der Handhabungsmanipulator kann den Werkzeughalter (Werkzeugspindel) anfahren, wenn die Schnittstelle passierbar ist. Mit dem Handhabungsmanipulator können zumindest Werkzeuge gewechselt werden.

Gemäß einer beispielhaften Ausgestaltung ist eine Bearbeitungszelle, der die Werkzeugmaschine zugeordnet ist, zwischen der Rüstzelle und der Handhabungszelle angeordnet.

Gemäß einer beispielhaften Ausgestaltung weisen die Bearbeitungszelle, die Rüstzelle und die Handhabungszelle jeweils eine eigene Tragstruktur (Rahmen, Gestell und dergleichen) auf. Gemäß einer beispielhaften Ausgestaltung weist zumindest die Handhabungszelle ein Gehäuse auf, das vom Gehäuse der Bearbeitungszelle getrennt ist. In einer beispielhaften Ausgestaltung weisen die Rüstzelle und die Bearbeitungszelle ein gemeinsames (Außen-) Gehäuse auf. Gleichwohl ist es vorstellbar, dass die Bearbeitungszelle, die Rüstzelle und die Handhabungszelle auf ein und derselben Basis (Grundgestell) angeordnet sind.

Gemäß einer weiteren beispielhaften Ausgestaltung des Fertigungssystems stellt der Handhabungsmanipulator eine Primärfunktion und zumindest eine Sekundärfunktion bereit, wobei die Primärfunktion einen Werkzeugwechsel umfasst, und wobei die Sekundärfunktion einen Werkstückwechsel umfasst.

Mit anderen Worten kann der Handhabungsmanipulator der Rüstzelle beispielsweise im Rahmen der Einzelfertigung oder der Fertigung von Kleinserien für einen Werkstückwechsel genutzt werden. Dies erlaubt einen direkten Zugang für einzelne Werkstücke. Es muss nicht zwingend die (globale) Transfer- und Speichervorrichtung genutzt werden.

Der Werkzeugwechsel erfolgt üblicherweise mittels Doppelgreifer, so dass ein schneller Wechsel zwischen einem auszuwechselnden Werkzeug und einem einzuwechselnden Werkzeug möglich ist. In einer beispielhaften Ausgestaltung ist in der Rüstzelle für den Doppelgreifer eine Parkposition vorgesehen. Auf diese Weise kann der Doppelgreifer abgelegt werden, wenn der Handhabungsmanipulator für weitere Funktionen verwendet wird.

Gemäß einer weiteren beispielhaften Ausgestaltung des Fertigungssystems stellt der Handhabungsmanipulator zumindest eine weitere Sekundärfunktion bereit, die ein Blockrüsten mit einem Werkzeugsatz umfasst. Dies umfasst beispielhaft den Transfer eines Werkzeugträgers, der Plätze für mehrere Werkzeuge bereitstellt. Der Werkzeugträger ist beispielsweise als Scheibenträger oder Revolver-Träger mit einer Mehrzahl von Speicherplätzen für Werkzeuge ausgestaltet, wobei die Speicherplätze für die Werkzeuge kreisförmig um ein Zentrum verteilt sind. Beispielhaft kann der Handhabungsmanipulator den Doppelgreifer ablegen, um sodann einen Werkzeugträger zu greifen und bedarfsweise zwischen der Rüstzelle und einer Umgebung zu transferieren.

Auf diese Weise kann eine Mehrzahl von Werkzeugen schnell verfügbar gemacht werden. Aus der Menge der am Werkzeugträger vorgehaltenen Werkzeuge können einzelne gezielt in den Werkzeughalter (Werkzeugspindel) der Werkzeugmaschine eingewechselt werden.

Gemäß einer weiteren beispielhaften Ausgestaltung des Fertigungssystems ist der Handhabungsmanipulator als SCARA-Roboter gestaltet und mit zwei oder mehr zueinander parallelen Schwenkachsen versehen, wobei der SCARA-Roboter vorzugsweise entlang einer zu den Schwenkachsen parallel ausgerichteten Achse linear verfahrbar ist. Bei einem SCARA-Roboter handelt es sich beispielsweise um einen horizontalen Gelenkarmroboter mit mehreren horizontal orientierten Schwenkachsen.

In einer beispielhaften Ausgestaltung ist der Handhabungsmanipulator der Rüstzelle mit seiner Basis an einer vertikal orientierten Führungsschiene in der Rüstzelle angeordnet. Auf diese Weise kann der Handhabungsmanipulator insgesamt vertikal verfahren werden. Dieser Bewegungsfreiheitsgrad muss also nicht durch die Schwenkgelenke des Handhabungsmanipulators bereitgestellt werden. Ein Werkzeugwechsel umfasst üblicherweise das Platzieren des Greifers in einer horizontalen Ebene zum Greifen des einzuwechselnden oder des auszuwechselnden Werkzeugs sowie eine vertikale Bewegung zum Ausrücken aus dem jeweiligen Sitz sowie zum Absetzen/Einrücken an der neuen Zielposition.

Gemäß einer weiteren beispielhaften Ausgestaltung des Fertigungssystems weist die Werkzeugmaschine Folgendes auf:
- einen Gestellblock,
- einen Y-Schlitten, der an einer Y-Führung an einer Unterseite des Gestellblocks angeordnet und relativ zum Gestellblock horizontal verfahrbar ist,
- einen X-Schlitten, der an einer X-Führung an einer Schrägseite des Gestellblocks angeordnet und relativ zum Gestellblock horizontal verfahrbar ist, wobei der Gestellblock als Schrägbett-Gestellblock gestaltet ist, wobei der X-Schlitten entlang einer X-Achse verfahrbar ist, die senkrecht zu einer Y-Achse orientiert ist, entlang der der Y-Schlitten verfahrbar ist,
- einen Z-Schlitten, der an einer Z-Führung an einer Vorderseite des X-Schlittens vertikal verfahrbar ist, und
- einen am Y-Schlitten mittelbar oder unmittelbar aufgenommenen Drehantrieb, der einen Tisch mit Werkstückhalter trägt.

Auf diese Weise lässt sich eine kompakt gestaltete Werkzeugmaschine mit geringen Abmessungen sowie einer hohen Steifigkeit realisieren.

Gemäß einer weiteren beispielhaften Ausgestaltung des Fertigungssystems ist die Werkzeugmaschine einer Bearbeitungszelle zugeordnet ist, die von der Handhabungszelle und insbesondere auch von der Rüstzelle getrennt ist. Beispielhaft ist die Bearbeitungszelle zwischen der Handhabungszelle und der Rüstzelle angeordnet. Die Trennung zielt in erster Linie auf eine räumliche Trennung ab. Für einen Transfer zwischen der Bearbeitungszelle und der Handhabungszelle ist eine Schnittstelle vorgesehen. Für einen Transfer zwischen der Bearbeitungszelle und der Rüstzelle ist eine weitere Schnittstelle vorgesehen.

Mit anderen Worten kann die Bearbeitungszelle mit der Werkzeugmaschine mit geringem Aufwand um eine Handhabungszelle und bedarfsweise um eine Rüstzelle ergänzt werden, um gemeinsam ein zumindest teilweise automatisiertes Fertigungssystem zu bilden. Das Fertigungssystem erlaubt einen zumindest teilweise automatisierten Werkstückwechsel. In beispielhaften Ausgestaltungen erlaubt das Fertigungssystem einen zumindest teilweise automatisierten Werkzeugwechsel.

Die kompakte Gestaltung der Werkzeugmaschine erlaubt eine schrankartige Gestaltung, bei der ein Unterbau vorgesehen ist, der Steuerungstechnik, Fluidtechnik, Hilfsaggregate und Ähnliches beherbergt. Dies gilt zumindest für beispielhafte Ausgestaltungen. Auf dem Unterbau ist bei diesen Ausgestaltungen ein Oberbau angeordnet, der die eigentliche Werkzeugmaschine umfasst. Die hängende Anordnung des Y-Schlittens am Gestellblock sorgt dafür, dass Bearbeitungskräfte und Reaktionskräfte von einem kompakten Kern der Werkzeugmaschine aufgenommen werden. Beispielsweise hat die Gestaltung des Unterbaus der schrankartigen Struktur keinen oder nur einen geringen Einfluss auf die statische Steifigkeit der Werkzeugmaschine.

Beispielhaft ist die Gestaltung aus Unterschrank und Oberschrank an die übliche Körpergröße eines Bedieners angepasst, so dass Elemente im Oberschrank gut sichtbar und einfach zugänglich sind. In ähnlicher Weise kann auch die Handhabungszelle schrankartig gestaltet sein, wobei die dortige Handhabungseinheit in einem auf einem Unterschrank sitzenden Oberschrank angeordnet ist. In ähnlicher Weise kann auch die Rüstzelle schrankartig gestaltet sein, wobei der dortige Handhabungsmanipulator in einem auf einem Unterschrank sitzenden Oberschrank angeordnet ist. Beispielhaft beträgt die Höhe des Fertigungssystems 1,50 m bis 2,50 m, wobei eine Unterteilung in Unterschrank und Oberschrank erfolgt.

Die vorliegende Offenbarung bezieht sich ferner auf eine Anlage zur spanenden Fertigung, mit einem Fertigungssystem gemäß zumindest einer der hierin beschriebenen Ausgestaltungen, und mit einer kombinierten Transfer- und Speichervorrichtung, die Folgendes aufweist:
- eine Speicherebene, umfassend zwei oder mehr voneinander in einer Längsrichtung beabstandete Speicher mit übereinander angeordneten Speicherplätzen für Werkstückträger zur Aufnahme von Rohlingen oder bearbeiteten Werkstücken,
- eine sich in der Längsrichtung erstreckende Transfereinrichtung, umfassend insbesondere eine bodenseitige Führung und einen Fahrständer, der eine Handhabungseinrichtung trägt,
- zumindest eine neben oder zwischen den Speichern angeordnete Bearbeitungsschnittstelle zur direkten oder mittelbaren Ankopplung einer Werkzeugmaschine,
- zumindest eine Beschickungsschnittstelle, insbesondere an einer Stirnseite der Vorrichtung, die für ein fahrerloses Transportfahrzeug erreichbar ist,

wobei die Transfereinrichtung einen Werkstücktransfer zwischen der Beschickungsschnittstelle, der Speicherebene und der zumindest einen Bearbeitungsschnittstelle bewerkstelligt, und
wobei ein Werkstücktransfer zwischen der Vorrichtung und der Werkzeugmaschine mittelbar unter Nutzung einer Handhabungseinheit der Handhabungszelle erfolgt.

Die Handhabungszelle ist zwischen der Bearbeitungszelle mit der Werkzeugmaschine sowie der kombinierten Transfer- und Speichervorrichtung angeordnet. Die Transfer- und Speichervorrichtung eignet sich beispielhaft zum Speichern sowie zum Transferieren einer Vielzahl von Werkstücken, die jeweils in einem mit einer Vielzahl von Aufnahmeplätzen versehenen Werkstückträger angeordnet sind. Die Vereinzelung und Handhabung individueller Werkstücke kann sodann in der Handhabungszelle erfolgen.

Die Anlage kann eine Mehrzahl von Fertigungssystemen aufweisen, die jeweils an eine Bearbeitungsschnittstelle angekoppelt sind. Auf diese Weise können aufeinander aufbauende Bearbeitungsschritte durch miteinander verkettete Werkzeugmaschinen durchgeführt werden, wobei der Werkstücktransfer teilautomatisiert oder hochautomatisiert erfolgt. Die Anlage weist ferner zumindest eine begrenzte Speicherkapazität auf. Dies erlaubt einen teilautomatisierten oder hochautomatisierten Betrieb, beispielsweise über Nacht oder über das Wochenende. Es kann sich auf diese Weise eine um Speichermöglichkeiten erweiterte Bus-Topologie ergeben, bei der die kombinierte Transfer- und Speichervorrichtung eine Mehrzahl von Fertigungssystemen miteinander verbindet.

Gemäß einem weiteren Aspekt bezieht sich die vorliegende Offenbarung auf eine kombinierte Transfer- und Speichervorrichtung für die spanende Fertigung, insbesondere zur Herstellung feinmechanischer Werkstücke, die Folgendes aufweist:
- eine Speicherebene, umfassend zwei oder mehr voneinander in einer Längsrichtung beabstandete Speicher mit übereinander angeordneten Speicherplätzen für Werkstückträger zur Aufnahme von Rohlingen oder bearbeiteten Werkstücken,
- eine sich in der Längsrichtung erstreckende Transfereinrichtung, umfassend insbesondere eine bodenseitige Führung und einen Fahrständer, der eine Handhabungseinrichtung trägt,
- zumindest eine neben oder zwischen den Speichern angeordnete Bearbeitungsschnittstelle zur direkten oder mittelbaren Ankopplung einer Werkzeugmaschine, und
- zumindest eine Beschickungsschnittstelle, insbesondere an einer Stirnseite der Vorrichtung, die für ein fahrerloses Transportfahrzeug erreichbar ist,
wobei die Transfereinrichtung einen Werkstücktransfer zwischen der Beschickungsschnittstelle, der Speicherebene und der zumindest einen Bearbeitungsschnittstelle bewerkstelligt.

Die Vorrichtung eignet sich für die Handhabung feinmechanischer Werkstücke mit begrenzten Abmessungen, beispielsweise für Bauteile von Uhren, Schmuck und ähnlichem. Derartige Werkstücke sind häufig hinreichend klein, so dass der für die Speicherung/zwischen Speicherung erforderliche Platz in der Speicherebene nicht übermäßig groß gegenüber dem Bauraum ist, der ohnehin für die Transfereinrichtung sowie die Ankopplung von Werkzeugmaschinen oder dergleichen über Bearbeitungsschnittstellen erforderlich ist.

Beispielhaft kann die kombinierte Transfer- und Speichervorrichtung einen Gang aufweisen, in dessen Mitte eine bodenseitige (oder deckenseitige) Führung angeordnet ist, wobei rechts und links Speicher und Bearbeitungsschnittstellen angeordnet sein können. Sofern die Transfereinrichtung dazu befähigt ist, Werkstückträger durch die zumindest eine Bearbeitungsschnittstelle zu transferieren, ist auch eine Platzierung in einem Speicher bzw. eine Entnahme aus dem Speicher möglich. Ein und dieselbe Transfereinrichtung kann also die Speicherebene bedienen und für einen Austausch durch die Bearbeitungsschnittstellen genutzt werden. In einer beispielhaften Ausgestaltung kann dieselbe Transfereinrichtung auch für den Austausch über die Beschickungsschnittstelle genutzt werden.

Die Werkstückträger können beispielhaft als Tablare, Trays oder Werkstückpaletten gestaltet sein. Die Werkstückträger können zur Aufnahme einer Mehrzahl von Werkstücken, Rohlingen, Halbzeugen, Reststücken, Butzen und ähnlichem gestaltet sein. Die an der Transfereinrichtung angeordnete Handhabungseinrichtung kann auch als Werkstückträger-Handhabungseinrichtung bezeichnet werden.

Die Beschickungsschnittstelle dient einerseits zur Beladung mit neuen Werkstücken, beispielsweise in Form von Rohlingen, zumindest in beispielhaften Ausgestaltungen. Die Beschickungsschnittstelle dient ferner auch zur Abfuhr bearbeiteter Werkstücke und/oder Reststücke, zumindest in beispielhaften Ausgestaltungen. Die Zufuhr und Abfuhr von Werkstücken kann über ein und dieselbe Beschickungsschnittstelle erfolgen. Es ist auch vorstellbar, an einem ersten Ende der Vorrichtung eine erste Beschickungsschnittstelle und an einem zweiten Ende eine zweite Beschickungsschnittstelle vorzusehen.

Gemäß einer beispielhaften Ausgestaltung der Vorrichtung ist zumindest ein Speicher als Speicherregal gestaltet. Auf diese Weise kann übereinander eine Mehrzahl von Speicherplätzen für Werkstückträger bereitgestellt werden. Bei einer beispielsweise mannshohen Gestaltung der Transfervorrichtung kann eine beträchtliche Anzahl von Werkstücken in übereinander angeordneten Werkstückträgern gespeichert und bei Bedarf abgerufen werden. Auch hier kommt zum Tragen, dass übliche feinmechanische Werkstücke kompakt gestaltet sind, zumindest im Verhältnis zu üblicher Transfer- und Handhabungstechnik. Mit anderen Worten kann eine Vielzahl von Speicherplätzen bereitgestellt werden, ohne den Fußabdruck (Footprint) der Vorrichtung nennenswert zu erhöhen.

Gemäß einer weiteren beispielhaften Ausgestaltung der Vorrichtung ist die Transfereinrichtung dazu ausgebildet, einen Werkstückträger bedarfsweise in einer Längsrichtung und einer Querrichtung zu transferieren, insbesondere in einer Horizontalebene. Auf diese Weise kann der Werkstückträger längs entlang der Führung verfahren werden. Ein Austausch mit dem Speicher bzw. ein Austausch durch eine Bearbeitungsschnittstelle umfasst üblicherweise eine seitliche Bewegung in der Querrichtung.

Gemäß einer weiteren beispielhaften Ausgestaltung der Vorrichtung weist die Transfereinrichtung einen Fahrständer und einen Längsantrieb auf, der den Fahrständer entlang der Längsrichtung verfährt. Beispielsweise handelt es sich um einen Längsantrieb mit bodenseitiger Führung, zum Beispiel in Form einer Führungsschiene. An dieser Führung ist beispielhaft ein Schlitten angeordnet, der einen Fahrständer (Fahrsäule) trägt.

Gemäß einer weiteren beispielhaften Ausgestaltung der Vorrichtung weist die Handhabungseinrichtung einen verfahrbaren Linearantrieb auf, der die Werkstückträger in einer Horizontalebene linear verfährt, und wobei der Linearantrieb vorzugsweise vertikal verfahrbar ist. Mit anderen Worten ist der Linearantrieb zusätzlich zum Längsantrieb vorgesehen. Der Linearantrieb stellt die seitliche Bewegung in der Querrichtung bereit. Beispielhaft umfasst der Linearantrieb eine Konsole, die durch einen Vertikalantrieb (Hubantrieb) vertikal verfahrbar ist. Die Konsole ist beispielsweise an einer Vertikalführung des Fahrständers vertikal verfahrbar gelagert. Die Vertikalbewegung (Hubbewegung) kann zum Aufnehmen und Ablegen von Werkstückträgern genutzt werden.

Gemäß einer weiteren beispielhaften Ausgestaltung der Vorrichtung ist der Linearantrieb als teleskopierbarer Linearantrieb gestaltet. Mit anderen Worten nutzt der Linearantrieb den zur Verfügung stehenden Bauraum günstig aus. Dies bezieht sich beispielhaft auf die seitliche Bewegung in der Querrichtung. Bei einer gegebenen Breite des sich in der Längsrichtung erstreckenden Gangs verbleibt der Querrichtung nur wenig Bauraum. Dieser wird bei einer teleskopierbaren Gestaltung des Linearantriebs gut genutzt. Mit anderen Worten kann der Linearantrieb eine begrenzte Erstreckung aufweisen und gleichwohl einen beträchtlichen Verfahrweg bereitstellen.

Gemäß einer weiteren beispielhaften Ausgestaltung der Vorrichtung weist der Linearantrieb eine Teleskopführung mit zwei zueinander parallel angeordneten Führungsabschnitten auf, wobei ein erster Führungsabschnitt einer Basisführung und ein zweiter Führungsabschnitt einem Träger für Werkstückträger zugeordnet ist. Dies erlaubt einen Verfahrweg, der im Idealfall beinahe das Doppelte des Verfahrweges bei einer einfachen Führung umfasst.

Gemäß einer weiteren beispielhaften Ausgestaltung der Vorrichtung umfasst der Träger zwei Aufnahmeplätze für Werkstückträger, wobei vorzugsweise ein Drehantrieb für die Aufnahmeplätze vorgesehen ist. Die beiden Aufnahmeplätze sind beispielsweise um 180° zueinander versetzt und einander gegenüberliegend angeordnet.

Auf diese Weise kann ein effizienter Austausch zweier Werkstückträger erfolgen. Es ist lediglich eine 180°-Drehung erforderlich, um einen der beiden Plätze bereitzustellen, zumindest in einer beispielhaften Ausgestaltung. Mit anderen Worten kann also ein Austausch eines Werkstückträgers ohne große (globale) Bewegungen der Transfereinrichtung erfolgen.

In einer beispielhaften Ausgestaltung sind die Aufnahmeplätze jeweils gegenüber der Horizontalen bzw. gegenüber der Erstreckung der Führungsabschnitte der Teleskopführung geneigt. Dies gilt in einer beispielhaften Ausgestaltung auch für Aufnahmeplätze in den Speichern der Speicherebenen (globaler Speicher) und Aufnahmeplätze in der Handhabungszelle (Pufferspeicher). Dies vereinfacht das Angreifen und Aufnehmen der Werkstückträger mit der Handhabungseinrichtung der Transfereinrichtung.

Da die Werkstücke nicht direkt über die Handhabungseinrichtung transferiert werden, verringert sich die Anforderung an die Genauigkeit der Bewegungen der Transfereinrichtung und der Handhabungseinrichtung. Die von der Handhabungseinrichtung getragenen und bewegten Werkstückträger sind hinreichend robust gestaltet, so dass eine hohe Transfergeschwindigkeit möglich ist.

Gemäß einer weiteren beispielhaften Ausgestaltung der Vorrichtung weist die Handhabungseinrichtung ferner einen Drehantrieb auf, der die Orientierung des Linearantriebs in der Horizontalebene dreht. Auf diese Weise kann der Linearantrieb beispielsweise eine Längsorientierung oder eine Querorientierung aufweisen. Ferner ist je nach Ausgestaltung eine Querorientierung nach rechts sowie eine Querorientierung nach links vorstellbar. Auf diese Weise kann der zur Verfügung gestellte Verfahrweg ausgenutzt werden.

Gemäß einer weiteren beispielhaften Ausgestaltung der Vorrichtung ist der Drehantrieb dazu ausgebildet, den Linearantrieb zwischen einer 0°-Stellung, einer 90°-Stellung und einer 180°-Stellung zu verschwenken. Somit kann die Transfereinrichtung bzw. die von dieser gehaltene Handhabungseinrichtung die rechte Längsseite und die linke Längsseite der Vorrichtung bedienen. Auf diese Weise können sowohl an der rechten Längsseite als auch an der linken Längsseite Speicher, Bearbeitungsschnittstellen und gegebenenfalls Transferschnittstellen vorgesehen sein.

Gemäß einer weiteren beispielhaften Ausgestaltung der Vorrichtung ist sowohl auf einer ersten Seite als auch einer zweiten Seite in Bezug auf die Längsrichtung zumindest ein Speicher und/oder eine Bearbeitungsschnittstelle zur Ankopplung einer Werkzeugmaschine vorgesehen. Mit anderen Worten kann sich die Transfereinrichtung entlang eines Ganges zwischen einer ersten (zum Beispiel linken) Vertikalebene und einer zweiten Vertikalebene erstrecken und bewegen, so dass in diesem Gang ein Transfer der Werkstückträger nach rechts und nach links möglich ist. Auf diese Weise wird der gegebene Bauraum gut ausgenutzt. Eine Vielzahl von Speicherplätzen kann bereitgestellt werden. Ferner können Werkzeugmaschinen an beiden Seiten angekoppelt werden. Es kann sich eine um Speichermöglichkeiten erweiterte Bus-Topologie ergeben, bei der mehrere Werkzeugmaschinen an eine kombinierte Transfer- und Speichervorrichtung angekoppelt sind, die sowohl den Bus für den Transfer als auch Speichermöglichkeiten bereitstellt.

Beispielhaft erstreckt sich die Vorrichtung in der Längsrichtung, wobei entlang der Längserstreckung rechts und links jeweils eine Mehrzahl von Speichern und zumindest eine Bearbeitungsschnittstelle vorgesehen ist. An die Bearbeitungsschnittstelle kann jeweils eine Werkzeugmaschine direkt oder indirekt angekoppelt werden. An zumindest einer der beiden Stirnseiten der Vorrichtung ist beispielhaft eine Beschickungsschnittstelle ausgebildet, die für einen Austausch von Werkstückträgern mit der Umgebung ausgebildet ist.

Gemäß einer weiteren beispielhaften Ausgestaltung der Vorrichtung erstreckt sich die Transfereinrichtung entlang der Längsrichtung zwischen einer ersten Stirnseite und einer zweiten Stirnseite, wobei zumindest an der ersten Stirnseite oder der zweiten Stirnseite eine Beschickungsschnittstelle angeordnet ist. Dort kann ein Transportfahrzeug, beispielsweise ein fahrerloses Transportfahrzeug, an die Vorrichtung ankoppeln. In einer beispielhaften Ausgestaltung ist die Beschickungsschnittstelle mit einem vertikal öffnenden Tor versehen, beispielsweise einem Rolltor, Schwingtor oder einem Segmenttor.

In einer beispielhaften Ausgestaltung ist die Erstreckung der Vorrichtung in Längsrichtung größer als die Höhe der Vorrichtung. Auf diese Weise ergibt sich genügend Bauraum, um ein Tor in den Innenraum der Vorrichtung verfahren zu können. Dies hat den Vorteil, dass die Beschickungsschnittstelle, an die in einer beispielhaften Ausgestaltung nur temporär ein Fahrzeug angekoppelt wird, im nicht gekoppelten Zustand verschlossen ist.

Gemäß einer weiteren beispielhaften Ausgestaltung der Vorrichtung ist genau eine Beschickungsschnittstelle an einer Stirnseite vorgesehen, wobei die Transfereinrichtung entlang der Längsrichtung hin und her verfahrbar ist, um an der Beschickungsschnittstelle Rohteile aufzunehmen und bearbeitete Werkstücke und/oder Reststücke abzugeben. Die Transfereinrichtung kann also einerseits die Vorrichtung selbst beladen und andererseits für einen Werkstücktransfer zwischen angekoppelten Werkzeugmaschinen (gegebenenfalls mit jeweiliger Handhabungszelle) sorgen.

Gemäß einer weiteren beispielhaften Ausgestaltung der Vorrichtung ist die Beschickungsschnittstelle mit einem Tor versehen, das zwischen einer geschlossenen Stellung und einer geöffneten Stellung verfahrbar ist, wobei das Tor in der geöffneten Stellung zumindest teilweise deckenseitig an einer Oberseite der Vorrichtung geführt ist. Dies hat den Vorteil, dass das Tor beim Öffnen und Schließen an den Seiten keinen wesentlichen Bauraum beansprucht. Somit steht dieser Bereich für Speicher und/oder Bearbeitungsschnittstellen zur Verfügung. Im geöffneten Zustand kann das Tor zumindest abschnittsweise horizontal orientiert unter dem Dach der Vorrichtung platziert sein. Im geschlossenen Zustand ist das Tor vertikal orientiert. Das Tor ist beispielhaft als Gliedertor oder Segmenttor gestaltet.

Gemäß einer weiteren beispielhaften Ausgestaltung der Vorrichtung ist die zumindest eine Bearbeitungsschnittstelle mit einer Werkzeugmaschine gekoppelt, die Folgendes aufweist:
- einen Gestellblock,
- einen Y-Schlitten, der an einer Y-Führung an einer Unterseite des Gestellblocks angeordnet und relativ zum Gestellblock horizontal verfahrbar ist,
- einen X-Schlitten, der an einer X-Führung an einer Schrägseite des Gestellblocks angeordnet und relativ zum Gestellblock horizontal verfahrbar ist, wobei der Gestellblock als Schrägbett-Gestellblock gestaltet ist, wobei der X-Schlitten entlang einer X-Achse verfahrbar ist, die senkrecht zu einer Y-Achse orientiert ist, entlang der der Y-Schlitten verfahrbar ist,

- einen Z-Schlitten, der an einer Z-Führung an einer Vorderseite des X-Schlittens vertikal verfahrbar ist, und
- einen am Y-Schlitten mittelbar oder unmittelbar aufgenommenen Drehantrieb, der einen Tisch mit Werkstückhalter trägt.

Auf diese Weise kann die Werkzeugmaschine für einen bestimmten Zeitraum autonom arbeiten, eine hohe Anzahl an Werkstücken kann bereitgestellt und nach der Bearbeitung gespeichert werden. Mehrere Werkzeugmaschinen können über die Vorrichtung miteinander verkettet werden.

Gemäß einer weiteren beispielhaften Ausgestaltung der Vorrichtung ist zwischen zumindest einer Bearbeitungsschnittstelle und einer Werkzeugmaschine eine Handhabungszelle angeordnet, die Folgendes aufweist:
- eine erste Schnittstelle zur Werkzeugmaschine, die seitlich an den Arbeitsraum der Werkzeugmaschine ankoppelt,
- eine zweite Schnittstelle zur Bearbeitungsschnittstelle für Transferzwecke,
- eine Handhabungseinheit, insbesondere in Form eines Handhabungsroboters, und
- zumindest einen Pufferspeicher, insbesondere zur Aufnahme zumindest eines Werkstückträgers,
wobei die Handhabungseinheit für einen automatisierten Werkstückwechsel ausgebildet ist.

Der Transfer von Werkstücken zwischen der Speicherebene der Vorrichtung und dem Arbeitsraum der Werkzeugmaschine erfolgt gemäß dieser Ausgestaltung unter Nutzung der Transfereinrichtung der Vorrichtung selbst, sowie der Handhabungseinheit der Handhabungszelle. Die Werkstücke werden in der Handhabungszelle vereinzelt und vom Werkstückträger entnommen. Die Handhabung in der kombinierten Transfer- und Speichervorrichtung erfolgt in einem gepackten Zustand im Werkstückträger.

Die vorliegende Offenbarung bezieht sich ferner auf eine Anlage zur spanenden Fertigung, mit einer kombinierten Transfer- und Speichervorrichtung gemäß zumindest einer der hierin beschriebenen Ausgestaltungen, und mit zumindest einem Fertigungssystem mit zumindest einer Werkzeugmaschine und einer Handhabungszelle, die zwischen einer Bearbeitungsschnittstelle der Vorrichtung und der Werkzeugmaschine angeordnet ist, wobei ein Werkstücktransfer zwischen der Vorrichtung und der Werkzeugmaschine mittelbar unter Nutzung einer Handhabungseinheit der Handhabungszelle erfolgt.

Auf diese Weise lässt sich die Transfer- und Speichervorrichtung mit dem Fertigungssystem kombinieren, um eine Anlage bereitzustellen, die teilautomatisiert oder hochautomatisiert betreibbar ist.

Weitere Merkmale und Vorteile der Offenbarung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Werkzeugmaschine mit Werkstückhalter;
- Fig. 2:: eine weitere Ansicht der Werkzeugmaschine unter Auslassung von in Fig. 1 gezeigten Komponenten;
- Fig. 3:: eine Ansicht eines flachen Rohlings, auf dessen Basis ein Werkstück erzeugt wird;
- Fig. 4:: eine perspektivische Ansicht eines Fertigungssystems mit einer Werkzeugmaschine, einer Handhabungszelle sowie einer Rüstzelle;
- Fig. 5:: eine perspektivische, vergrößerte Teilansicht auf Basis der Darstellung gemäß Fig. 4 zur Veranschaulichung der Handhabungszelle;
- Fig. 6:: eine perspektivische, vergrößerte Teilansicht auf Basis der Darstellung gemäß Fig. 5 zur Veranschaulichung der Rüstzelle;
- Fig. 7:: eine vereinfachte schematische Ansicht eines Fertigungssystems mit Bearbeitungszelle, Handhabungszelle und Rüstzelle, in frontaler Orientierung;
- Fig. 8:: eine perspektivische Teilansicht einer Fertigungsanlage mit einer kombinierten Transfer- und Speichervorrichtung;
- Fig. 9:: eine perspektivische, vergrößerte Teilansicht der Vorrichtung auf Basis der Darstellung gemäß Fig. 8 zur Veranschaulichung einer Transfereinrichtung;
- Fig. 10:: eine stirnseitige Teilansicht einer Vorrichtung gemäß den Figuren 8 und 9; und
- Fig. 11:: eine schematische Draufsicht auf eine Fertigungsanlage mit einer kombinierten Transfer- und Speichervorrichtung sowie angekoppelten Fertigungssystem.

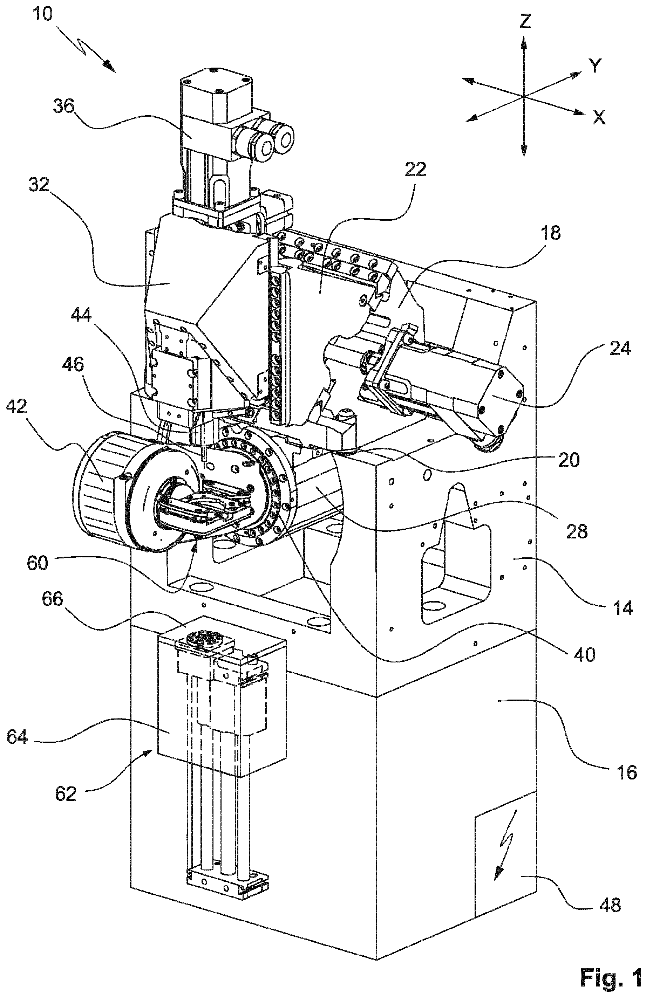

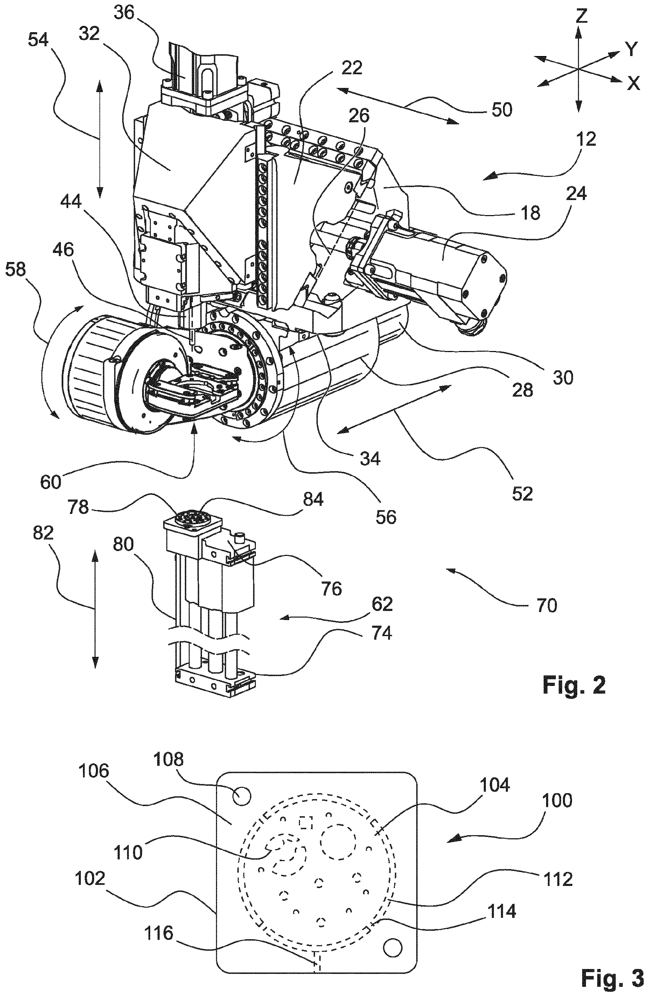

Fig. 1 veranschaulicht anhand einer perspektivischen Darstellung eine beispielhafte Ausgestaltung einer Werkzeugmaschine 10, die sich zur Herstellung kompakter feinmechanischer Bauteile eignet. Fig. 2 zeigt eine korrespondierende Darstellung zur Veranschaulichung einer Kernmaschine 12 der Werkzeugmaschine 10.

Die Werkzeugmaschine 10 umfasst einen Stützrahmen 14, der im Ausführungsbeispiel auf einem Untergestell 16 gelagert ist. Die Kernmaschine 12 umfasst einen Gestellblock 18. Der Gestellblock 18 ist über Lagerpunkte 20 am Stützrahmen 14 gelagert. Beispielhaft sind vier derartiger Lagerpunkte 20 vorgesehen. Die Kernmaschine 12 ist derart gestaltet, dass Verfahrantriebe der Werkzeugmaschine 10 direkt oder indirekt am kompakten Gestellblock 18 gelagert sind. Dies führt zu einer günstigen Krafteinleitung. Mit anderen Worten müssen der Stützrahmen 14 und das Untergestell 16 im Ausführungsbeispiel gemäß den Figuren 1 und 2 üblicherweise lediglich Gewichtskräfte aufnehmen, nicht jedoch Reaktionskräfte, die während der Bearbeitung auftreten. Der kompakte Gestellblock 18 erlaubt eine platzsparende Gestaltung der Kernmaschine 12 und der gesamten Werkzeugmaschine 10, zumindest in der anhand der Figuren 1 und 2 veranschaulichten Ausführungsform.

In den Figuren 1 und 2 ist ferner aus Veranschaulichungsgründen ein kartesisches Koordinatensystem X-Y-Z angedeutet. Die Zuordnung der Achsen erfolgt gemäß üblichen Konventionen im Bereich der Werkzeugmaschinen. Die X-Achse beschreibt üblicherweise eine Seitenerstreckung. Die Y-Achse beschreibt üblicherweise eine Tiefenerstreckung. Die Z-Achse beschreibt üblicherweise eine Höhenerstreckung (Vertikale). Die X-Achse und die Y-Achse sind üblicherweise horizontal orientiert. Die Achsen X-Y-Z stehen üblicherweise rechtwinklig aufeinander.

Eine sogenannte A-Achse beschreibt üblicherweise Rotationsbewegungen um die X-Achse. Eine B-Achse beschreibt üblicherweise Rotationsbewegungen um die Y-Achse. Eine C-Achse beschreibt üblicherweise Rotationsbewegungen um die Z-Achse. Sofern eine Drehachse (oder Schwenkachse) in einer kinematischen Kette direkt oder indirekt durch eine andere Drehachse (oder Schwenkachse) gehalten und rotierbar ist, verändert sich üblicherweise diese Zuordnung. Dies ist dem Fachmann bekannt.

Die Werkzeugmaschine 10 gemäß den Figuren 1 und 2 ist als sogenannte Fünfachs-Maschine gestaltet, wobei drei translatorische Achsen (X, Y, Z) und zwei rotatorische Achsen (zum Beispiel B-Achse und C-Achse) vorgesehen sind. Es ist grundsätzlich auch eine Gestaltung als Vierachs-Maschine vorstellbar, wobei dann üblicherweise nur eine rotatorische Achse (zum Beispiel B-Achse) vorgesehen ist. Im Bereich der Werkzeugmaschinen umfasst der Begriff Achse üblicherweise eine Baugruppe mit zwei relativ zueinander beweglichen Teilen, entsprechender Führung/Lagerung sowie einen zugehörigen Antrieb. Es versteht sich, dass der Fachmann auch andere Achszuordnungen kennt und diese bei Bedarf transformieren kann.

Die Kernmaschine 12 umfasst einen X-Schlitten 22, der am Gestellblock 18 in der X-Richtung linear verfahrbar gelagert ist, vergleiche auch einen mit 50 bezeichneten Doppelpfeil in Fig. 2. Zur Bewegung des X-Schlittens 22 ist ein Antrieb 24 vorgesehen. Im Ausführungsbeispiel gemäß den Figuren 1 und 2 ist der X-Schlitten 22 an einer Schrägseite 26 des Gestellblocks 18 geführt. Mit anderen Worten stellt der Gestellblock 18 ein Schrägbett für den X-Schlitten 22 bereit. Beispielhaft ist die Schrägseite 26 um 30° bis 60° gegenüber einer Vertikalebene geneigt, die durch die Achsen X und Z definiert ist.

Ferner ist ein Y-Schlitten 28 vorgesehen, der am Gestellblock 18 in der Y-Richtung linear verfahrbar gelagert ist, vergleiche auch einen mit 52 bezeichneten Doppelpfeil in Fig. 2. Zur Bewegung des Y-Schlittens 28 ist ein Antrieb 30 vorgesehen, vergleiche Fig. 2. Mit anderen Worten hängt der Y-Schlitten 28 an einer Unterseite 34 des Gestellblocks 18. Dies führt zu der gewünschten kompakten Gestaltung des Gestellblocks 18. Reaktionskräfte, die bei der Bearbeitung entstehen, werden auf kurzem Wege durch den Gestellblock 18 hindurch geleitet. Der Stützrahmen 14 und das Untergestell 16 dienen primär als Podest für den Gestellblock 18. Die Steifigkeit der Werkzeugmaschine 10 hängt primär von der Steifigkeit der Kernmaschine 12 ab, insbesondere von der Steifigkeit des Gestellblocks 18.

Die Kernmaschine 12 umfasst ferner einen Z-Schlitten 32, der am Gestellblock 18 in der Z-Richtung linear verfahrbar gelagert ist, vergleiche auch einen mit 54 bezeichneten Doppelpfeil in Fig. 2. Zur Bewegung des Z-Schlittens 32 ist ein Antrieb 36 vorgesehen.

Dem Y-Schlitten ist ferner ein Drehantrieb 40 zugeordnet, der auch als B-Antrieb oder B-Achse bezeichnet werden kann. Im Ausführungsbeispiel trägt der Drehantrieb 40 einen weiteren Drehantrieb 42, der auch als C-Antrieb oder C-Achse bezeichnet werden kann. Bei den Drehantrieben 40, 42 kann es sich um rotatorische Antriebe handeln, beispielsweise um Drehantriebe oder Schwenkantriebe. Die mögliche Schwenkbewegung des Drehantriebs 40 wird durch einen gekrümmten Doppelpfeil 56 in Fig. 2 angedeutet. Die mögliche Schwenkbewegung des Drehantriebs 42 wird durch einen gekrümmten Doppelpfeil 58 in Fig. 2 angedeutet.

Die Pfeile 50, 52, 54, 56, 58 in Fig. 2 veranschaulichten insgesamt fünf Bewegungsachsen. Im Ausführungsbeispiel sind die Achsen 50 und 54 Werkzeugachsen, die das Werkzeug verfahren. Hingegen sind die Achsen 52, 56 und 58 Werkstückachsen, die das Werkstück verfahren. In Fig. 1 ist ferner mit 48 eine Steuereinrichtung für die Werkzeugmaschine 10 angedeutet. Die Werkzeugmaschine 10 verfügt regelmäßig über eine NC oder CNC Steuerung.

Im Ausführungsbeispiel trägt der Z-Schlitten 32 einen Werkzeughalter 44, an dem ein Bearbeitungswerkzeug 46 aufgenommen ist. Bei dem Bearbeitungswerkzeug 46 handelt es sich beispielsweise um einen Fräser, einen Bohrer und dergleichen. Es versteht sich, dass während der Bearbeitung ein Werkzeugwechsel erfolgen kann. Der Werkzeughalter 44 ist Bestandteil einer Werkzeugspindel (in den Figuren 1 und 2 nicht explizit dargestellt) mit einem Antrieb für das Bearbeitungswerkzeug 46. Auf diese Weise kann das Bearbeitungswerkzeug 46 um seine Längsachse (im Ausführungsbeispiel vertikale Achse) rotiert werden. Andere Gestaltungen sind vorstellbar.

Am Drehantrieb 42 (zum Beispiel C-Achse) ist ein Werkstückhalter 60 befestigt. Ein daran aufgenommenes Werkstück kann über die Achsen 52, 56, 58 bewegt werden. Der Werkstückhalter 60 kann auch als Palette oder Werkstückpalette bezeichnet werden oder mit einer solchen gekoppelt sein. Auch die Integration oder Aufnahme einer Spannvorrichtung am Werkstückhalter 60 ist denkbar. Je nach konkreter Gestaltung und Ansteuerung kann die B-Achse (Pfeil 56) und/oder die C-Achse (Pfeil 58) genutzt werden, um den Werkstückhalter 60 um 180° zu drehen. Mit anderen Worten kann auf diese Weise der Werkstückhalter 60 mit dem Werkstück gewendet werden, um Werkstücke auf zumindest zwei Seiten bearbeiten zu können.

In einer beispielhaften Ausgestaltung auf Basis der mit fünf angetriebenen Achsen 50, 52, 54, 56, 58 versehenen Werkzeugmaschine 10 gemäß Fig. 1 und Fig. 2 kann auf den Drehantrieb 42 (C-Achse 58) verzichtet werden, wenn der Werkstückhalter 62 stattdessen direkt am Drehantrieb 40 (B-Achse 56) befestigt wird.

Der Werkstückhalter 60 kann Bestandteil einer Abstützvorrichtung 70 sein, die ferner eine Abstützeinheit 62 umfasst. Die Abstützeinheit 62 dient bedarfsweise zur temporären Abstützung eines zu bearbeitenden Werkstücks, wenn der Werkstückhalter 60 eine bestimmte Lage (beispielsweise: Neutrallage) eingenommen hat. Dies ist zum Beispiel dann von Vorteil, wenn dünne Werkstücke mit hoher Genauigkeit erzeugt werden sollen.

Der Werkstückhalter 60 und die Abstützeinheit 62 können unabhängig voneinander implementiert werden. In bestimmten Ausführungsformen und für bestimmte Anwendungen werden der Werkstückhalter 60 und die Abstützeinheit 62 miteinander kombiniert. Auf diese Weise kann sich eine Abstützvorrichtung 70 mit Abstützeinheit 62 und Werkstückhalter 60 ergeben.

Bei dem in Fig. 1 veranschaulichten Ausführungsbeispiel umfasst die Abstützeinheit 62 ein Gehäuse 64 sowie einen Deckel 66, der das Gehäuse 64 in Richtung auf den Werkstückhalter 60 abschließt. Der Deckel 66 lässt sich bedarfsweise öffnen, um Elemente der Abstützeinheit 62 in Richtung auf den Werkstückhalter 60 verfahren zu können. Im geschlossenen Zustand verhindert der Deckel 66 das Eindringen von Spänen und dergleichen.

Die Abstützeinheit 62 umfasst eine Basis 74, die gestellfest mit der Werkzeugmaschine 10 verbunden ist. Die Basis 74 trägt einen durch einen Antrieb 80 verfahrbaren Träger 76, vergleiche den Doppelpfeil 82 in Fig. 2. In diesem Ausführungsbeispiel ist der Träger 76 vertikal verfahrbar. Dies ist nicht einschränkend zu verstehen. Auch eine horizontale Verfahrbarkeit des Trägers 76 ist vorstellbar, wenn der Werkstückhalter 60 entsprechend ausgerichtet ist.

Am Träger 76 ist eine Stützplatte 78 aufgenommen, welche im ausgefahrenen Zustand der Abstützeinheit 62 dem Werkstückhalter 60 angenähert ist und mit diesem zusammenwirkt, um ein Werkstück abzustützen. Beispielhaft weist die Stützplatte 78 Formschlusselemente 84 auf, die an die Kontur des Werkstücks angepasst sind. Die Stützplatte 78 ist an die Gestaltung des Werkstücks angepasst (etwa rondenförmig, oval oder eckig). Auf diese Weise kann auch ein dünnes Werkstück mit hoher Präzision bearbeitet werden, wenn eine Abstützung durch die Stützplatte 78 erfolgt. Ferner kann die Stützplatte 78 dazu dienen, ein beispielsweise von einem Reststück getrenntes Werkstück zu halten, wenn der Werkstückhalter 60 entladen und mit einem neuen Rohling versorgt wird.

Fig. 3 veranschaulicht anhand einer Draufsicht auf eine Flachseite eine beispielhafte Ausgestaltung eines Werkstücks 100. Das Werkstück 100 wird auf Basis eines flachen Rohlings 102 erzeugt. Beispielhaft werden dünne Rohlinge 102 als Scheiben von einem Halbzeug (Stab) abgesägt. Der Rohling 102 besteht beispielsweise aus einem Metallwerkstoff, etwa aus Messing, Stahl, Aluminium, Titan oder dergleichen.

Das Werkstück 100 weist im Ausführungsbeispiel gemäß Fig. 3 eine rondenförmige Gestalt auf, vergleiche die Ronde 104. Das Werkstück 100 ist kreisrund oder im Wesentlichen rund gestaltet. Es sind auch abweichende Gestaltungen denkbar (oval, ballig oder gar eckig).

Das Werkstück 100 wird spanend im Rohling 102 erzeugt. Nach der Bearbeitung verbleibt ein Rand (Reststück) 106. Mit anderen Worten wird im Ausführungsbeispiel das Werkstück 100 schlussendlich aus dem Rohling 102 ausgeschnitten bzw. vom Rand 106 separiert. Der Rohling 102 ist beispielsweise mit zumindest einer Positionierhilfe 108 versehen. Die zumindest eine Positionierhilfe108 erlaubt eine genaue und präzise Positionierung des Rohlings 102 für die Bearbeitung.

Im Werkstück 100 werden bei der Bearbeitung üblicherweise Gestaltelemente 110 ausgebildet, etwa Sacklöcher, Durchgangslöcher, Durchbrüche, Ausnehmungen und Ähnliches. Die Bearbeitung zur Erzeugung der Gestaltelemente 110 erfolgt in einem Ausführungsbeispiel auf einer Flachseite. In bestimmten Ausführungsbeispielen erfolgt die Bearbeitung auf beiden (gegenüberliegenden) Flachseiten. Es ist daher von Vorteil, wenn der Werkstückhalter 60 eine Zugänglichkeit des Rohlings 102 im Bereich des zu erzeugenden Werkstücks 100 auf beiden Flachseiten ermöglicht.

Die Trennung des Werkstücks 100 vom umlaufenden Rand 106 des Rohlings 102 erfolgt beispielhaft durch einen Spalt oder Ringspalt 112, der spanend erzeugt wird. In einem Ausführungsbeispiel wird der Ringspalt 112 zunächst nicht durchgehend erzeugt, stattdessen verbleiben Stege 114, die das Werkstück 100 (bzw. die Ronde 104) mit dem umgebenden Rand 106 verbinden. Gegen Ende der Bearbeitung werden die Stege 114 entfernt, um das Werkstück 100 vom Rand 106 zu trennen. Die Bearbeitung des Werkstücks 100 kann Bearbeitungsschritte in einer (einzigen) Werkzeugmaschine 10 oder Bearbeitungsschritte in mehreren Werkzeugmaschinen 10 umfassen.

Fig. 3 veranschaulicht ferner anhand eines Einschnitts 116 eine seitliche Bearbeitung, die eine seitliche oder frontale Zuführung des Werkzeugs (vergleiche das Bearbeitungswerkzeug 46 in Fig. 1 und 2) erforderlich macht. Sofern ein Einschnitt 116 oder ein vergleichbares seitliches Gestaltelement erzeugt werden soll, ist es von Vorteil, wenn der Rohling 102 dort mit seinem Rand 106 nicht auf einer Auflage aufliegt.

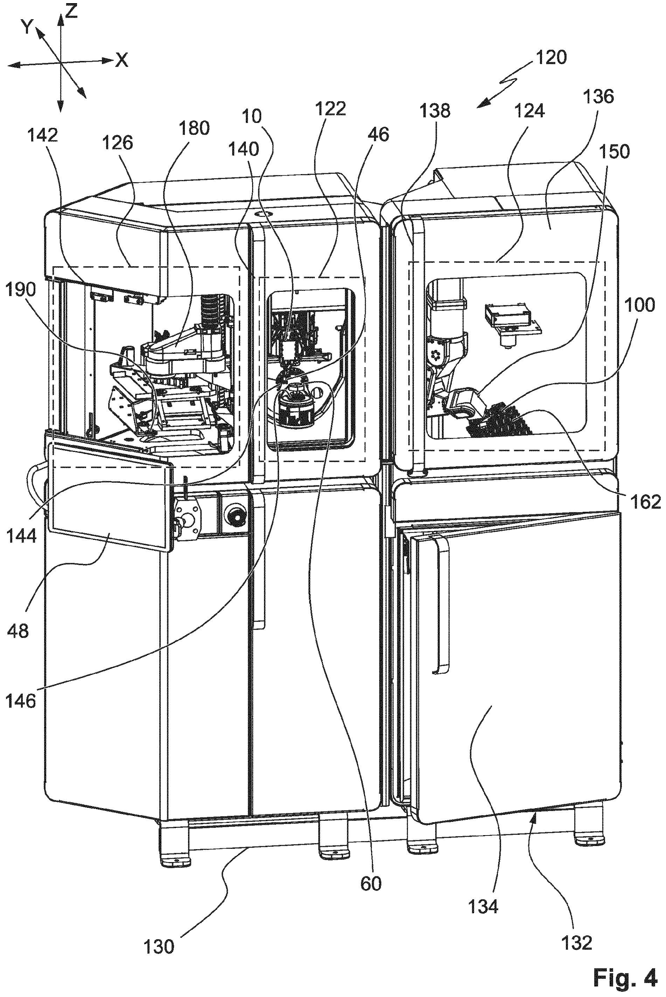

Mit Bezugnahme auf die Figuren 4-7 wird ein Fertigungssystem 120 veranschaulicht, das mit einer Werkzeugmaschine 10 versehen ist, die dem anhand der Figuren 1 und 2 beschriebenen Ausführungsbeispiel zumindest ähnlich gestaltet ist. Die Werkzeugmaschine 10 ist äußerst kompakt gestaltet, wobei sich dies insbesondere in einer kompakt gestalteten Kernmaschine 12 mit einem kompakt gestalteten Gestellblock 18 niederschlägt.

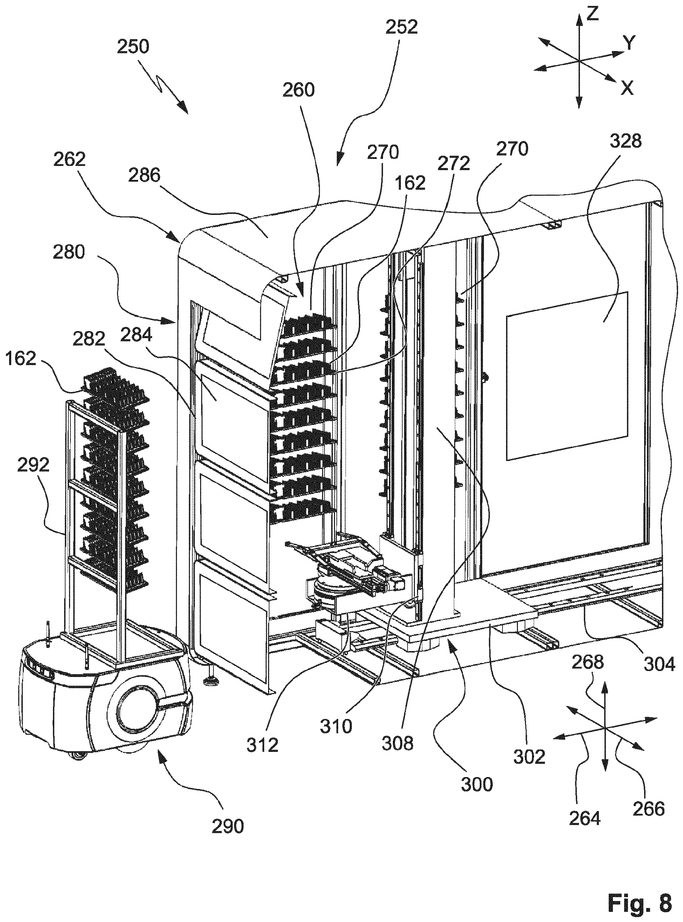

Mit Bezugnahme auf die Figuren 8-11 wird eine Fertigungsanlage 250 beschrieben, die insbesondere als Anlage zur spanenden Fertigung gestaltet ist. Die Fertigungsanlage umfasst eine kombinierte Transfer- und Speichervorrichtung, die mit zumindest einer Werkzeugmaschine 10 bzw. mit zumindest einem Fertigungssystem 120 koppelbar ist, um Werkstücke 100 automatisiert (teilautomatisiert oder vollständig automatisiert) zuführen und abführen zu können.

Fig. 4 zeigt eine perspektivische frontale Ansicht auf eine Ausführungsform eines mit 120 bezeichneten Fertigungssystems. Das Fertigungssystem 120 ist im Ausführungsbeispiel modular aufgebaut. Das Fertigungssystem 120 weist zumindest eine Bearbeitungszelle 122 auf, die mit einer Werkzeugmaschine 10 versehen ist, vergleiche hierzu die exemplarische Beschreibung der Werkzeugmaschine 10 anhand der Figuren 1 und 2.

Das Fertigungssystem 120 umfasst im Ausführungsbeispiel ferner eine Handhabungszelle 124 sowie eine Rüstzelle 126. Die Handhabungszelle 124 dient in erster Linie (Primärfunktion) dem Transfer von Werkstücken 100 (bzw. deren Rohlingen 102), also dem Werkstückwechsel. Die Rüstzelle 126 dient in erster Linie (Primärfunktion) dem Werkzeugwechsel.

Die Werkzeugmaschine 10 ist zwischen der Handhabungszelle 124 und der Rüstzelle 126 angeordnet. Das Fertigungssystem 120 weist im Ausführungsbeispiel eine gemeinsame Basis 130 für die Bearbeitungszelle 122, die Handhabungszelle 124 und die Rüstzelle 126 auf. Ferner ist ein Gehäuse 132 vorgesehen, dass etwa schrankartig gestaltet ist. Das Gehäuse 132 ist im Ausführungsbeispiel mit einem Unterbau 134 und einem Aufbau 136 versehen. Dies trifft jeweils auf die Bearbeitungszelle 122, die Handhabungszelle 124 und die Rüstzelle 126 zu.

Hier zeigt sich die kompakte Gestaltung der Werkzeugmaschine 10. Beispielhaft ist das Fertigungssystem 120 mit dem Gehäuse 132 etwa mannshoch gestaltet. Mannshoch bedeutet in dem gezeigten Ausführungsbeispiel, dass der jeweilige Aufbau 136 gut für einen stehenden Bediener erreichbar ist. Der jeweilige Unterbau 134 dient beispielsweise zur Aufnahme von Hilfsaggregaten, Hilfskomponenten, Energieversorgung, Steuerungstechnik und dergleichen. Der Unterbau 134 ist im Ausführungsbeispiel etwa tisch hoch gestaltet. Der Aufbau 136 ist (unter Berücksichtigung des Unterbaus 134) etwa schrankhoch gestaltet.

Mit anderen Worten weist das Fertigungssystem 120 ein schrankartiges Layout mit Unterbau 134 und Aufbau 136 auf, wobei die Werkzeugmaschine 10 mit ihren Fahrachsen einen Arbeitsraum 144 definiert, der sich im Aufbau 136 befindet. Auch sind im Ausführungsbeispiel strukturelle Bauteile der Werkzeugmaschine 10, vergleiche insbesondere den Gestellblock 18 sowie die Schlitten 22, 28, 32 in Fig. 1 und Fig. 2, im Aufbau 136 angeordnet, also im oberen Abschnitt des schrankartigen Gehäuses 132.

Diese Gestaltung ist aufgrund der Kompaktheit der Werkzeugmaschine 10 möglich. Gleichwohl bringt diese Kompaktheit, die einen kleinen Arbeitsraum 144 definiert, bestimmte Randbedingungen für die Automatisierung (Werkstückwechsel, Werkzeugwechsel) mit sich.

Im Arbeitsraum 144 können ein an der Werkzeugmaschine 10 gehaltenes Bearbeitungswerkzeug 46 sowie ein Werkstückhalter 60 zur Aufnahme eines Werkstücks 100 relativ zueinander verfahren werden, um das Werkstück 100 zu bearbeiten. Im Ausführungsbeispiel gemäß Fig. 4 ist der Werkstückhalter 60 an einem Tisch 146 angeordnet. Der Tisch 146 ist beispielsweise der C-Achse zugeordnet, dies ist jedoch nicht einschränkend zu verstehen.

Fig. 4 zeigt perspektivisch die Vorderseite des Fertigungssystems 120. Das Fertigungssystem 120 ist derart gestaltet, dass für einen Bediener, der frontal vor dem Gehäuse 132 steht, relevante Abschnitte der Bearbeitungszelle 122, der Handhabungszelle 124 sowie der Rüstzelle 126 gut zugänglich und einsehbar sind. Dies wird durch entsprechende Sichtfenster im jeweiligen (oberen) Aufbau 136 der Bearbeitungszelle 122, der Handhabungszelle 124 sowie der Rüstzelle 126 ermöglicht.

Ferner ist mit 48 eine Steuereinrichtung angedeutet, die hier etwa als Bedienpanel, Berührbildschirm oder dergleichen ausgestaltet ist. Die Bearbeitungszelle 122, die Handhabungszelle 124 und die Rüstzelle 122 sind jeweils über Türen 138, 140, 142 im Aufbau 136 zugänglich. Die Bearbeitungszelle 122, die Handhabungszelle 124 und die Rüstzelle 122 können auch als Module des Fertigungssystems 120 bezeichnet werden.

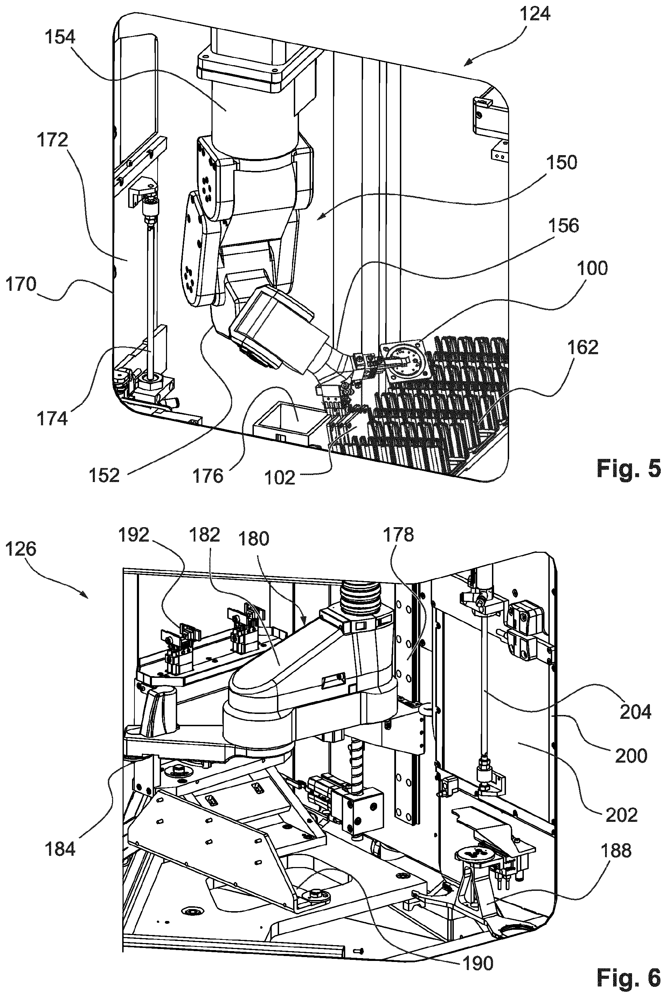

In Zusammenschau beschreiben die Figuren 4 und 5 die Handhabungszelle 124. Die Handhabungszelle 124 umfasst eine Handhabungseinheit 150, die im Ausführungsbeispiel als Roboter 152 gestaltet ist. Der Roboter 152 ist beispielhaft als Knickarm-Roboter 152 gestaltet. Der Roboter 152 ist hängend angeordnet und an einer oberen Basis 154 aufgenommen. Der Roboter 152 weist verschiedene Bewegungsfreiheitsgrade zur Bewegung von Werkstücken 100 auf.

Die Handhabungseinheit 150 trägt einen Doppelgreifer 156. Auf diese Weise beschleunigt sich der Werkstückwechsel, wenn mit einem Greifer ein fertiges Werkstück 100 aus der Werkzeugmaschine 10 entnommen und mit dem anderen Greifer ein neues Werkstück 100 eingewechselt werden kann.

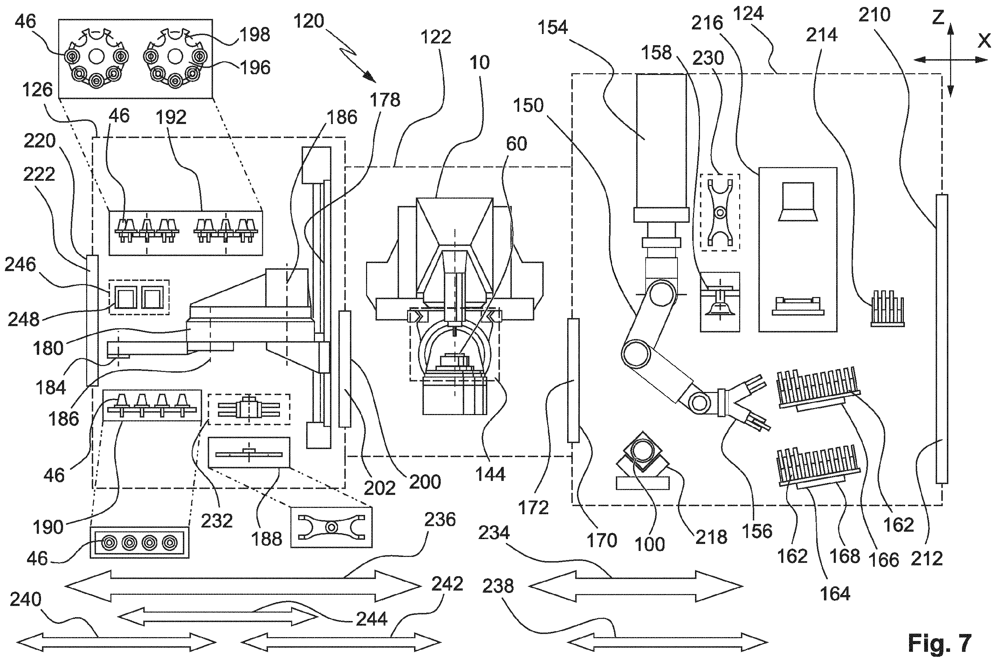

Fig. 5 zeigt einen Werkstückträger 162, der etwa als Tray oder Tablar mit einer Vielzahl von Speicherplätzen für Rohlinge 102 bzw. Werkstücke 100 versehen ist. Die Handhabungseinheit 150 der Handhabungszelle 124 kann Werkstücke aus dem Werkstückträger 162 entnehmen und zur Werkzeugmaschine 10 überführen. Die Handhabungszelle 124 kann zur Aufnahme eines Werkstückträgers 162 oder mehrerer Werkstückträger 162 ausgebildet sein, vergleiche auch Fig. 7.

Fig. 5 veranschaulicht ferner eine mit 170 bezeichnete Schnittstelle zwischen der Handhabungszelle 124 und der Bearbeitungszelle 122. Die Schnittstelle 170 umfasst eine Tür 172, die mit einem Antrieb 174 versehen ist. Im Ausführungsbeispiel ist die Tür 172 als vertikal verfahrbare Schiebetür gestaltet, ähnlich einer Guillotine. Die Tür 172 ist zwischen einer geschlossenen Stellung und einer geöffneten Stellung verfahrbar. Im Ausführungsbeispiel ist die geschlossene Stellung eine obere Stellung und die geöffnete Stellung eine untere Stellung. Für den Werkstückwechsel kann die Handhabungseinheit 150 zumindest teilweise durch die geöffnete Tür 172 hindurch in Richtung auf den Arbeitsraum 144 der Werkzeugmaschine 10 in der Bearbeitungszelle 122 bewegt werden.

Ferner ist in Fig. 5 mit 176 beispielhaft eine Abführung angedeutet. Die Abführung 176 ist etwa als Schacht zur Abführung von Reststücken 106 (auch bezeichnet als Butzen) gestaltet. Die Abführung 176 kann etwa dann genutzt werden, wenn das Werkstück 100 in der Werkzeugmaschine 10 schlussendlich von dem umgebenden Rand (Reststück 106) des Rohlings 102 getrennt wird. Beispielsweise kann die Handhabungseinheit 150 dazu genutzt werden, das (beispielsweise ringförmige) Reststück 106 mechanisch zu greifen und an die Abführung 176 zu übergeben. Beispielhaft kann die Handhabungseinheit 150 dazu genutzt werden, das vom Reststück 106 getrennte Werkstück 100 (beispielsweise die Runde 104 gemäß Fig. 3) mittels Sauggreifer oder mechanisch zu greifen und in einem freien Platz/Sitz eines Werkstückträgers 162 abzulegen.

In Zusammenschau beschreiben die Figuren 4 und 6 die Rüstzelle 126. Die Rüstzelle 126 umfasst einen Handhabungsmanipulator 180, der im Ausführungsbeispiel als sogenannter SCARA-Roboter 182 gestaltet ist. Ein SCARA-Roboter 182 ist ein Gelenkarmroboter mit mehreren horizontal orientierten Schwenkachsen 186, vergleiche auch Fig. 7. Der Handhabungsmanipulator 180 ist durch einen Linearantrieb entlang einer Vertikalführung 178 innerhalb der Rüstzelle 126 verfahrbar. An einem Arbeitsende des Handhabungsmanipulators 180 ist eine Schnittstelle 184 vorgesehen. Die Schnittstelle 184 dient beispielsweise zur Ankopplung eines Doppelgreifers 188, der in Fig. 6 in einer Parkposition entfernt von der Schnittstelle 184 gezeigt ist.

Mit dem Doppelgreifer 188 kann der Handhabungsmanipulator 180 Bearbeitungswerkzeuge 46 zwischen der Rüstzelle 126 und der Werkzeugmaschine 10 austauschen. In Fig. 6 sind mit 190, 192 verschiedene Speicherplätze für Bearbeitungswerkzeuge 46 angedeutet, die Bearbeitungswerkzeuge 46 einzeln oder blockweise aufnehmen können.

Fig. 6 veranschaulicht ferner eine mit 200 bezeichnete Schnittstelle zwischen der Rüstzelle 126 und der Bearbeitungszelle 122. Die Schnittstelle 200 umfasst eine Tür 202, die mit einem Antrieb 204 versehen ist. Im Ausführungsbeispiel ist die Tür 202 als vertikal verfahrbare Schiebetür gestaltet, ähnlich einer Guillotine. Die Tür 202 ist zwischen einer geschlossenen Stellung und einer geöffneten Stellung verfahrbar. Im Ausführungsbeispiel ist die geschlossene Stellung eine untere Stellung und die geöffnete Stellung eine obere Stellung.

Fig. 7 zeigt eine schematische frontale Ansicht des bereits anhand der Figuren 4-6 veranschaulichten Fertigungssystems 120 mit den modulartig gestalteten Zellen 122, 124, 126. Die Bearbeitungszelle 122 und insbesondere der Arbeitsraum 144 der Werkzeugmaschine 10 sind klein im Vergleich zu den Abmessungen der Handhabungszelle 124. Dies gilt zumindest teilweise auch für einen Vergleich der Bearbeitungszelle 122 und des Arbeitsraums 144 mit den Abmessungen der Rüstzelle 126.

Zwischen der Bearbeitungszelle 122 und der Handhabungszelle 124 ist eine Schnittstelle 170 mit Tür 172 angeordnet. Zwischen der Bearbeitungszelle 122 und der Rüstzelle 126 ist eine Schnittstelle 200 mit Tür 202 angeordnet. Die Handhabungszelle 124 weist ferner eine weitere Schnittstelle 210 mit Tür 212 auf. Die Schnittstelle 210 kann auch als Transferschnittstelle bezeichnet werden. Die Schnittstelle 210 wird beispielsweise für einen Transfer von Werkstückträgern 162 genutzt, die mit einer Mehrzahl oder Vielzahl von Werkstücken 100 bestückt sind.

Zur Aufnahme von einem oder mehreren Werkstückträger 162 weist die Handhabungszelle 124 im Ausführungsbeispiel Pufferspeicher 164, 166 auf, die jeweils mit einer Auflage 168 zur Aufnahme eines Werkstückträgers 162 versehen sind. Die Handhabungseinheit 150 kann mit dem Doppelgreifer 156 Werkstücke 100 aus einem der Werkstückträger 162 entnehmen und einen Werkstückwechsel am Werkstückhalter 60 der Werkzeugmaschine 10 vornehmen, ein bearbeitetes Werkstück 100 kann sodann wieder in einem der Werkstückträger 162 abgelegt werden. Der Werkstückwechsel erfolgt durch die Schnittstelle 170.

Zur Erhöhung der Genauigkeit der Positionierung ist im Ausführungsbeispiel ein Referenzteil 218 in der Handhabungszelle 124 angeordnet. Das Referenzteil 218 dient beispielhaft als Referenzanschlag zur Ausrichtung und Zentrierung eines Werkstücks 100 vor der Bearbeitung. Mit anderen Worten kann die Handhabungseinheit 150 mit dem Doppelgreifer 156 trotz einer vergleichsweise ungenauen Orientierung Werkstücke 100 aus einem Werkstückträger 162 entnehmen und vor dem Einwechseln in die Werkzeugmaschine 10 am Referenzteil 218 hochgenau ausrichten. Dies erhöht die Positioniergenauigkeit trotz einer vergleichsweise ungenauen Orientierung der Mehrzahl/Vielzahl von Werkstücken 100 im Werkstückträger 162.

In Fig. 7 ist ferner ein mit 214 bezeichneter Hilfsspeicher in der Handhabungszelle 124 angedeutet. Der Hilfsspeicher 214 kann auch als Quarantänespeicher bezeichnet werden. Der Hilfsspeicher 214 dient beispielsweise zur temporären Aufnahme einer bestimmten Anzahl von Werkstücken 100. Dies kann beispielsweise zu Zwecken der Qualitätssicherung erfolgen.

Ferner ist im Ausführungsbeispiel gemäß Fig. 7 in der Handhabungszelle 124 eine Überwachungsstation 216 vorgesehen. Beispielsweise ist die Überwachungsstation 216 als optische Überwachungsstation gestaltet. Dies ist nicht einschränkend zu verstehen. Die Überwachungsstation 216 erlaubt eine fertigungsnahe Überprüfung von Werkstücken 100, bevor diese durch die Transferschnittstelle 210 abgegeben werden. Es ist eine funktionale Kopplung zwischen der Überwachungsstation 216 und dem Hilfsspeicher 214 möglich, wenn im Hilfsspeicher 214 zu prüfende Werkstücke 100 abgelegt werden.

Es ist auch vorstellbar, den Doppelgreifer 156 durch einen Sauggreifer 158 zu ersetzen oder den Doppelgreifer 156 mit zumindest einem Sauggreifer 158 zu bestücken. Ein Sauggreifer 158 bietet sich beispielsweise für die Handhabung bearbeiteter Werkstücke 100 an. Mit einem Sauggreifer 158 kann ein bearbeitetes Werkstück 100 fluidisch gehalten werden. Dies erfolgt besonders materialschonend. Die Verwendung eines Sauggreifers 158 bietet sich beispielsweise dann an, wenn das Werkstück 100 vollständig von seinem Rand (Reststück 106) getrennt ist.

In Fig. 7 verdeutlicht ein mit 234 bezeichneter Pfeil eine Primärfunktion der Handhabungseinheit 150 der Handhabungszelle 124. Die Primärfunktion 234 ist der Werkstückwechsel. Es ist jedoch auch vorstellbar, zumindest eine Sekundärfunktion 238 bereitzustellen. Beispielsweise ist ein Sekundärgreifer 230 vorgesehen, der bedarfsweise für die Handhabungseinheit 150 nutzbar ist. Mit dem Sekundärgreifer 230 kann die Handhabungseinheit 150 Bearbeitungswerkzeuge 46 statt Werkstücke 100 wechseln.

Die Handhabungszelle 124 und die Rüstzelle 126 sind an einander gegenüberliegenden Seiten an die Bearbeitungszelle 122 angekoppelt. Bei der in Fig. 7 gezeigten Konfiguration führt dies dazu, dass die Werkzeugmaschine 10 und insbesondere deren Arbeitsraum 144 frontal zugänglich sind. Gerade bei vergleichsweise kleinen Arbeitsräumen 144 ist eine gute Einsehbarkeit sowie eine gute Zugänglichkeit hilfreich.

Die Rüstzelle 126 ist mit dem Handhabungsmanipulator 180 versehen, der im Ausführungsbeispiel Schwenkachsen 186 aufweist, die parallel zur Ansichtsebene gemäß Fig. 7 orientiert sind. An der Schnittstelle 184 des Handhabungsmanipulators kann ein Greifer, beispielsweise der Doppelgreifer 188 befestigt werden. Der Doppelgreifer 188 ist in Fig. 7 aus Veranschaulichungsgründen in zwei Ansichten (Seitenansicht und Draufsicht) gezeigt.

Mit dem Doppelgreifer 188 können Bearbeitungswerkzeuge 46 zwischen der Rüstzelle 126 und der Werkzeugmaschine 10 in der Bearbeitungszelle 122 gewechselt werden. Für die Bearbeitungswerkzeuge 46 sind in der Rüstzelle 126 verschiedene Speicherplätze 190, 192 vorgesehen. Die Speicherplätze 190, 192 sind in Fig. 7 aus Veranschaulichungsgründen in zwei Ansichten (Seitenansicht und Draufsicht) gezeigt.

Der Speicherplatz 190 weist mehrere Einzelplätze jeweils zur Aufnahme einzelner Bearbeitungswerkzeuge 46 auf (in Fig. 7 sind vier Bearbeitungswerkzeuge 46 im Speicherplatz 190 aufgenommen). Es handelt sich beispielsweise um Bearbeitungswerkzeuge 46 mit einem genormten Kegelschaft.

Der Speicherplatz 192 weist scheibenartig oder revolverartig gestaltete Werkzeugsätze 196 mit einer Mehrzahl von einzelnen Aufnahmesitzen 198 für Bearbeitungswerkzeuge 46 auf. Mit anderen Worten können die Bearbeitungswerkzeuge 46 in den Werkzeugsätzen 196 blockweise transferiert werden. Zu diesem Zweck kann beispielsweise die Schnittstelle 184 des Handhabungsmanipulators 180 die Werkzeugsätze 196 direkt greifen und halten. Auf diese Weise kann der Handhabungsmanipulator 180 für ein Blockrüsten genutzt werden. Dies umfasst beispielsweise einen Transfer bestückter oder unbestückter Werkzeugsätze 196 durch eine Schnittstelle 220, die mit einer Tür 222 versehen ist.

In Fig. 7 verdeutlicht ein mit 236 bezeichneter Pfeil eine Primärfunktion des Handhabungsmanipulators 180 der Rüstzelle 126. Die Primärfunktion 236 ist der Werkzeugwechsel. Es ist jedoch auch vorstellbar, zumindest eine Sekundärfunktion 240, 242 bereitzustellen. Beispielsweise betrifft eine Sekundärfunktion 240 das Blockrüsten, also das Wechseln kompletter Werkzeugsätze 196. Eine weitere Sekundärfunktion 242 betrifft beispielsweise einen Werkstückwechsel durch den Handhabungsmanipulator 180 der Rüstzelle 126. Zu diesem Zweck ist beispielsweise ein Sekundärgreifer 232 in der Rüstzelle 126 vorgesehen, der zur Aufnahme und Handhabung von Werkstücken 100 ausgebildet ist. Auf diese Weise kann der Handhabungsmanipulator 180 der Rüstzelle 126 bedarfsweise zumindest einzelne Werkstücke 100 zur Werkzeugmaschine 10 in die Bearbeitungszelle 122 transferieren oder von dort abführen.

Gemäß einer weiteren Ausführungsform ist eine Sekundärfunktion 244 vorgesehen, die einen Wechsel von Paletten oder Spannvorrichtungen durch den Handhabungsmanipulator 180 der Rüstzelle 126 umfasst. Mit 246 ist demgemäß in Fig. 7 ein Speicher für derartige Vorrichtungen 248 angedeutet. Eine solche Vorrichtung (Spannvorrichtung) 248 kann als Bestandteil des Werkstückhalters 60 ausgebildet oder anderweitig mit dem Werkstückhalter 60 koppelbar sein. Ein Vorrichtungswechsel durch den Handhabungsmanipulator 180 der Rüstzelle 126 bietet sich beispielsweise dann an, wenn ein Wechsel zwischen verschiedenen Werkstücktypen oder Werkstückabmessungen erfolgt. So weist die Werkzeugmaschine 10 beispielhaft einen Tisch zur Aufnahme von Werkstücken 100 auf, der mit einer Vorrichtung 248 bestückt ist, um die Werkstücke 100 halten und klemmen zu können.

Es versteht sich, dass die Sekundärfunktionen (vergleiche die Pfeile 238, 240, 242, 244 in Fig. 7) nicht in jeder Implementation gegeben sein müssen. Gleichwohl besteht die Möglichkeit, die Handhabungszelle 124 und gegebenenfalls die Rüstzelle 126 entsprechend zu ertüchtigen, zumindest in beispielhaften Ausführungsformen.

Im Ausführungsbeispiel liegt die maschinenferne Schnittstelle 220 der Rüstzelle 126 der maschinenseitigen Schnittstelle 200 gegenüber. Im Ausführungsbeispiel liegt die maschinenferne Schnittstelle 210 der Handhabungszelle 124 der maschinenseitigen Schnittstelle 170 gegenüber. Mit anderen Worten dient also beispielsweise die Handhabungszelle 124 als "Vermittler" zwischen der Werkzeugmaschine 10 und weiterer Handhabungstechnik für das Werkstückhandling. Mit anderen Worten dient also beispielsweise die Rüstzelle 126 als "Vermittler" zwischen der Werkzeugmaschine 10 und weiterer Handhabungstechnik für das Werkzeughandling.

Mit Bezugnahme auf die Figuren 8-11 wird eine kombinierte Transfer- und Speichervorrichtung 252 (nachfolgend: Vorrichtung) beschrieben, die mit zumindest einer Werkzeugmaschine 10 bzw. zumindest einem Fertigungssystem 120 zu einer Fertigungsanlage 250 kombinierbar ist.

Die Vorrichtung 252 ist sowohl für Speicherzwecke als auch für Transferzwecke nutzbar. Die Vorrichtung ist in geeigneter Weise mit der zumindest einen Werkzeugmaschine 10 koppelbar, so dass ein teilautomatisierter oder hochautomatisierter Werkstückwechsel ermöglicht ist. Die Vorrichtung 252 umfasst eine Speicherebene 260 mit einer Mehrzahl von Speichern 270. Der Begriff Speicherebene ist funktional zu verstehen. Bei den Speichern 270 handelt es sich beispielhaft um einen oder mehrere Regalspeicher.

Die Vorrichtung 252 umfasst ein Gehäuse 262, das die Speicher 270 der Speicherebene 260 beherbergt. Im Gehäuse 262sind weitere Elemente der Vorrichtung 252 beherbergt. Das Gehäuse weist eine Längserstreckung (vergleiche den Doppelpfeil 264, der eine Längsrichtung veranschaulicht) auf, die deutlich größer als die Quererstreckung (vergleiche den Doppelpfeil 266, der eine Querrichtung veranschaulicht) und deutlich größer als die Höhenerstreckung (vergleiche den Doppelpfeil 268, der eine Höhenrichtung veranschaulicht) ist. Im Ausführungsbeispiel ist ferner die Höhenerstreckung (Pfeil 268) größer als die Quererstreckung (Pfeil 266).

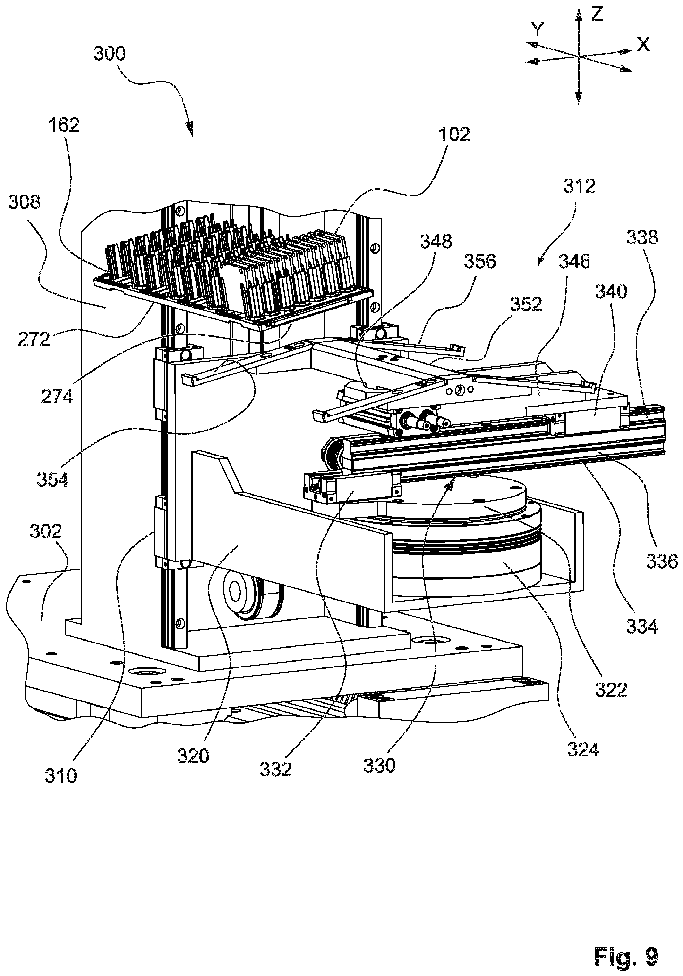

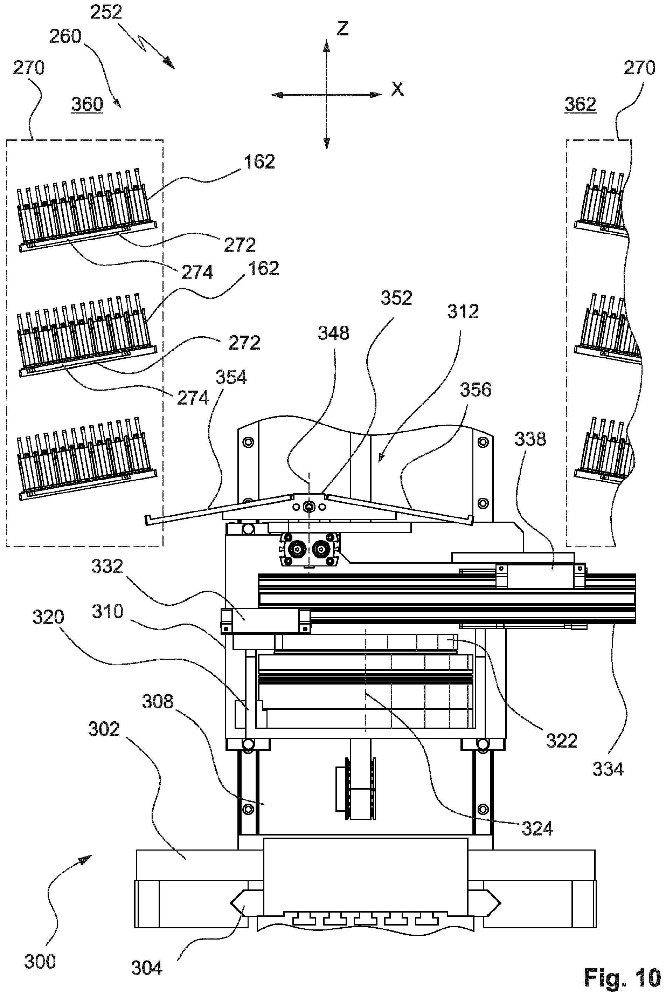

Im Ausführungsbeispiel gemäß Fig. 8 weisen die Speicher 270 mehrere übereinander angeordnete Speicherplätze 272 zur Aufnahme von Werkstückträgern 162 auf. Die Werkstückträger 162 dienen jeweils zur Aufnahme einer Vielzahl oder Mehrzahl von Werkstücken 100. Die Speicherplätze 272 umfassen im Ausführungsbeispiel jeweils Auflagen 274 zur Aufnahme von Werkstückträgern 162, vergleiche hierzu auch Fig. 9 und Fig. 10.

Die Vorrichtung 252 weist an einer Stirnseite eine Beschickungsschnittstelle 280 auf. Im Ausführungsbeispiel ist ein fahrerloses Transportfahrzeug 290 an die Beschickungsschnittstelle 280 herangefahren und dort mit der Vorrichtung 252 gekoppelt. Über die Beschickungsschnittstelle 280 können Werkstückträger 162 in die Vorrichtung 252 eingebracht oder aus der Vorrichtung 252 entnommen werden. Das Transportfahrzeug 290 ist im Ausführungsbeispiel als fahrerloses Transportfahrzeug (AGV) gestaltet und mit einer Mehrzahl von Werkstückträgern 162 versehen, die übereinander an einem Rahmen 292 angeordnet sind.

Der Transfer der Werkstückträger 162 durch die Beschickungsschnittstelle 280 erfolgt in einem geöffneten Zustand der Beschickungsschnittstelle 280. Die Beschickungsschnittstelle 280 weist ein Tor 282 auf, das im Ausführungsbeispiel als Segmenttor gestaltet ist und eine Mehrzahl von Segmenten 284 aufweist. Das Tor 282 bildet im geschlossenen Zustand eine vertikale Schließebene. Das Tor 282 kann zwischen einem geöffneten und einem geschlossenen Zustand verfahren werden. Im geöffneten Zustand ist das Tor 282 zumindest abschnittsweise unter eine Oberseite 286 des Gehäuses 262 verfahren. Mit anderen Worten sind im Ausführungsbeispiel die Segmente 284 des Tores 282 im geöffneten unter dem Dach (der Oberseite 286) des Gehäuses 262der Vorrichtung 252 geführt und bedarfsweise gehalten. Dies kann dazu führen, dass im geöffneten Zustand des Tores 282 der Bodenbereich und die seitlichen Seiten um die Beschickungsschnittstelle 280 gut zugänglich sind.

Die Vorrichtung 252 umfasst eine Transfereinrichtung 300, die einen Längsantrieb 302 umfasst, der einen entlang einer sich in der Längsrichtung 264 erstreckenden Führung 304 verfahrbaren Schlitten aufweist. Mit anderen Worten ist der Längsantrieb 302 im Ausführungsbeispiel bodenseitig geführt. Der Längsantrieb 302 trägt einen Fahrständer 308. Der Fahrständer ist in der Längsrichtung 264 translatorisch durch die Transfereinrichtung 300 verfahrbar.

Die Transfereinrichtung 300 trägt eine Handhabungseinrichtung 312, die zur Handhabung von Werkstückträgern 162 ausgebildet ist. Die Handhabungseinrichtung 312 ist über einen Vertikalantrieb 310 vertikal (Pfeil 268) entlang einer Vertikalführung am Fahrständer 308 verfahrbar. Der Vertikalantrieb 310 kann auch als Hubantrieb bezeichnet werden. Die Transfereinrichtung 300 kann die Handhabungseinrichtung 312 in der Längsrichtung 264 bedarfsweise zwischen den Speichern 270, der Beschickungsschnittstelle 280 und zumindest einer Bearbeitungsschnittstelle 328 verfahren.

Anhand der Figuren 9 und 10 wird die Detailgestaltung der im Ausführungsbeispiel gezeigten Vorrichtung 252 mit Transfereinrichtung 300 näher veranschaulicht.

Fig. 9 zeigt eine perspektivische vergrößerte Ansicht der Transfereinrichtung 300 und insbesondere der an dieser aufgenommenen Handhabungseinrichtung 312. Die Transfereinrichtung 300 umfasst den Fahrständer 308, an dem die Handhabungseinrichtung 312 durch den Vertikalantrieb 310 verfahrbar gehalten ist.

Die Handhabungseinrichtung 312 umfasst eine Konsole 320, die durch den Vertikalantrieb 310 vertikal verfahrbar ist. Die Konsole 320 trägt einen Tisch 322, der durch einen Drehantrieb 324 um eine vertikal orientierte Drehachse schwenkbar ist. Auf diese Weise kann der Tisch 322 in einer Horizontalebene gedreht werden. Der Tisch 322 trägt einen Linearantrieb 330. Der Linearantrieb 330 ist im Ausführungsbeispiel als teleskopierbarer Linearantrieb gestaltet.

Der Linearantrieb 330 umfasst eine Basisführung 332, die auf dem Tisch 322 sitzt. An der Basisführung 332 ist eine Teleskopführung 334 aufgenommen und verschieblich gelagert. Die Teleskopführung 334 umfasst im Ausführungsbeispiel einen ersten Führungsabschnitt 336 und einen zweiten Führungsabschnitt 338. Der erste Führungsabschnitt 336 ist der Basisführung 332 zugewandt. Der zweite Führungsabschnitt 338 ist einem Schlitten 340 zugewandt. Die beiden Führungsabschnitte 336, 338 erstrecken sich parallel zueinander. Auf diese Weise wird der effektive Verfahrweg des Linearantriebs 330 vergrößert. Der Linearantrieb 330 kann insgesamt über den Drehantrieb 324 verschwenkt werden.

Hierdurch wird der Schlitten 340 ebenso verschwenkt. Zusätzlich kann der Schlitten 340 durch den Linearantrieb 330 linear verfahren werden. Der Schlitten 340 trägt eine Konsole 346, die ihrerseits einen als Doppelträger gestalteten Träger 352 trägt. Im Ausführungsbeispiel ist ferner ein weiterer Drehantrieb 348 mit vertikal orientierter Drehachse zwischen der Konsole 346 und dem Träger 352 angeordnet. Im Ausführungsbeispiel ist der Träger 352 als Doppelträger ausgeführt, der sich symmetrisch zu einer Symmetrieebene erstreckt, die beispielsweise die Drehachse des Drehantriebs 348 schneidet.

Der Träger 352 weist zwei Aufnahmeplätze 354, 356 auf, die jeweils einen Werkstückträger 162 aufnehmen können. Im Ausführungsbeispiel sind die Aufnahmeplätze 354, 356 jeweils leicht gegenüber der Horizontalen geneigt. Die Neigung der Aufnahmeplätze 354, 356 ist an die Neigung der Auflagen 274 in den Speichern 270 angepasst. Im Ausführungsbeispiel werden die Aufnahmeplätze 354, 356 durch Gabelzinken gebildet, die einen Werkstückträger 162 untergreifen können. In Draufsicht weist der Doppelträger 352 beispielsweise eine H-förmige Gestalt auf.

Durch den (Doppel-) Träger 352 können Werkstückträger 162 schnell gewechselt werden, weil zwei Aufnahmeplätze 352, 354 vorgesehen sind, und weil der Drehantrieb 348 eine Drehung des Trägers 352 um eine Symmetrieachse erlaubt.

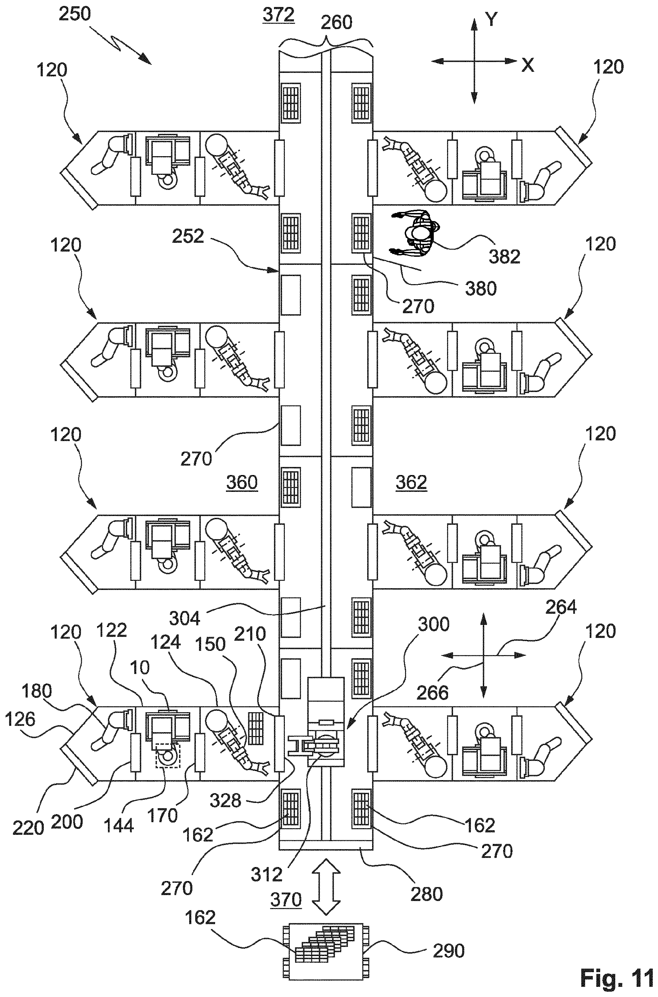

Der mit dem Tisch 322 gekoppelte Drehantrieb 324 erlaubt eine Verschwenkung des Linearantriebs 330, beispielsweise zwischen einer Orientierung zu einer ersten Seite (linke Seite 360 in Fig. 10), zu einer gegenüberliegenden, zweiten Seite (rechte Seite 362 in Fig. 10) und bedarfsweise einer Stirnseite (vergleiche hierzu die beiden Stirnseiten 370, 372 in Fig. 11). Mit anderen Worten kann also beispielsweise der Drehantrieb 324 ausgehend von einer 0°- Stellung (parallel zur Längsrichtung 264) um +90° und -90° verschwenkt werden, um die Seiten 360, 362 anzufahren.

Die Gestaltung des Linearantriebs 330 als teleskopierbarer Linearantrieb erlaubt hinreichend große Verfahrwege auch bei einer limitierten Quererstreckung (Querrichtung 266) der Vorrichtung 252 bzw. von deren Gehäuse 262. In diesem Zusammenhang veranschaulicht Fig. 10 beispielhaft die Bauraumverhältnisse im Ausführungsbeispiel. Die Transfereinrichtung 300 mit der Handhabungseinrichtung 312 kann zwischen Speichern 270 auf der ersten Seite 360 und der zweiten Seite 362 verfahren werden und bedarfsweise Werkstückträger 162 dort in der Speicherebene 260 ablegen und aufnehmen. Auch ein Wechsel von Werkstückträgern 162 über die Beschickungsschnittstelle 280 (vergleiche Fig. 8) ist möglich. Auf diese Weise dient die Vorrichtung 252 nicht nur als Transfervorrichtung, sondern auch als Speichervorrichtung mit einer beachtlichen Speicherkapazität in der Speicherebene 260.

Fig. 11 veranschaulicht anhand einer schematischen, vereinfachten Draufsicht eine beispielhafte Konfiguration einer Fertigungsanlage 250, die mit einer offenbarungsgemäß gestalteten Vorrichtung 252 versehen ist. Die Anlage 250 weist ferner mehrere offenbarungsgemäß gestaltete Fertigungssysteme 120 auf. Es ergibt sich in Fig. 11 eine Topologie, die einer Bus-Topologie ähnelt. Es versteht sich, dass die Position von Speichern 270 bzw. Fertigungssystemen 120 hinreichend flexibel wählbar ist. Die Fertigungssysteme 120 sind jeweils mit ihrer Transferschnittstelle 210 an eine der Bearbeitungsschnittstellen 328 der Vorrichtung 252 angekoppelt. In Fig. 11 sind einige der Speicher 270 mit Werkstückträgern 162 belegt, andere nicht.

Im Ausführungsbeispiel erfolgt der Austausch von Werkstücken 100 zwischen der Vorrichtung 252 und der Werkzeugmaschine 10 in der Bearbeitungszelle 122 mittelbar unter Nutzung der Handhabungszelle 124 mit der Handhabungseinheit 150.

Die Vorrichtung 252 erstreckt sich im Ausführungsbeispiel zwischen einer ersten Stirnseite 370 und einer zweiten Stirnseite 372. An zumindest einer der beiden Stirnseiten 370, 372 ist eine Beschickungsschnittstelle 280 zur Ankopplung eines Fahrzeugs 290 vorgesehen. Innerhalb der Vorrichtung 252 übernimmt die Transfereinrichtung 300 mit der Handhabungseinrichtung 312 den Transfer von Werkstückträgern 162.

Fig. 11 veranschaulicht ferner die seitliche Zugänglichkeit der Speicher 270. Im Ausführungsbeispiel ist auf der Seite 362 (hier: rechte Seite) mit 382 ein Bediener angedeutet, der in Draufsicht aufrecht vor einem der Speicher 270 steht. Die Speicher 270 der Speicherebene 260 sind über Türen 380 zugänglich. Auch auf diese Weise kann eine Beschickung der Vorrichtung 252 erfolgen. Zumindest einige der Speicher 270 der Speicherebene 260 sind seitlich für Bediener 382 zugänglich.

Die verschiedenen Fertigungssysteme 120 können aufeinander aufbauende Fertigungsschritte durchführen. Der Transfer zwischen einzelnen Fertigungssystemen 120 und gegebenenfalls eine Zwischenspeicherung erfolgt durch die kombinierte Transfer- und Speichervorrichtung 252. Gleichwohl ist auch eine parallele Abarbeitung gleichartiger Fertigungsschritte durch mehrere Fertigungssysteme 120 zur Erhöhung des Durchsatzes der gesamten Anlage 250 vorstellbar.

Im Ausführungsbeispiel gemäß Fig. 11 erfolgt der Werkzeugwechsel primär über die jeweilige Rüstzelle 126 des Fertigungssystems 120, insbesondere über den dort vorgesehenen Handhabungsmanipulator 180. Die Beschickung der Rüstzelle 126 erfolgt über die funktional von der Vorrichtung 252 abgewandte Schnittstelle 220.

Zuvor wurde bereits dargelegt, dass neben der primären Funktion von Rüstzelle 126 (Werkzeugwechsel) und Handhabungszelle 124 (Werkstückwechsel) grundsätzlich auch Sekundärfunktion vorstellbar sind. Dies betrifft beispielsweise eine zumindest beschränkte Fähigkeit zum Werkstückwechsel durch die Rüstzelle 126 und eine zumindest beschränkte Fähigkeit zum Werkzeugwechsel durch die Handhabungszelle 124.

## Patentansprüche

1. Fertigungssystem (120) für die spanende Fertigung, insbesondere zur Herstellung feinmechanischer Werkstücke (100), das Folgendes aufweist:
- zumindest eine Werkzeugmaschine (10), die zur Mehrachsbearbeitung ausgebildet ist, und die einen Werkzeughalter (44) und einen Werkstückhalter (60) aufweist, die relativ zueinander in vier oder fünf Achsen verfahrbar sind, wobei drei translatorische Achsen (X, Y, Z) und eine oder zwei rotatorische Achsen (B, C) vorgesehen sind,
wobei der Werkzeughalter (44) und der Werkstückhalter (60) an einer Rückseite eines Arbeitsraums (144) der Werkzeugmaschine (10) angeordnet sind,
- eine Handhabungszelle (124), die Folgendes aufweist:
- eine erste Schnittstelle (170) zur Werkzeugmaschine (10), die seitlich an den Arbeitsraum (144) ankoppelt,
- eine zweite Schnittstelle (210) für Transferzwecke,
- eine Handhabungseinheit (150), insbesondere in Form eines Handhabungsroboters, und
- zumindest einen Pufferspeicher (164, 166),
wobei die Handhabungseinheit (150) für einen automatisierten Werkstückwechsel ausgebildet ist,
**dadurch gekennzeichnet, dass**
die Handhabungseinheit (150) als hängender Knickarm-Roboter (152) ausgebildet ist, dessen Bewegungsbereich die erste Schnittstelle (170), eine Werkstückübergabeposition mit dem Werkstückhalter (60) und die zweite Schnittstelle (210) umfasst und
der durch die möglichen Verfahrwege der drei translatorischen Achsen (X, Y, Z) definierte Arbeitsraum (144) der Werkzeugmaschine (10) kleiner als 250 mm x 250 mm x 250 mm ist.

2. Fertigungssystem (120) nach Anspruch 1,
wobei die Handhabungseinheit (150) eine Primärfunktion und zumindest eine Sekundärfunktion bereitstellt, wobei die Primärfunktion einen Werkstückwechsel umfasst, und wobei die Sekundärfunktion einen Werkzeugwechsel umfasst.

3. Fertigungssystem (120) nach Anspruch 1 oder 2,
wobei die Handhabungseinheit (150) einen Doppelgreifer (156) aufweist, der zumindest zum Greifen von Rohlingen (102) ausgebildet ist.

4. Fertigungssystem (120) nach einem der Ansprüche 1-3,
wobei die Handhabungseinheit (150) einen Sauggreifer (158) aufweist, der insbesondere zur Aufnahme bearbeiteter Werkstücke (100) ausgebildet ist.

5. Fertigungssystem (120) nach einem der Ansprüche 1-4,
wobei der Pufferspeicher (164, 166) zumindest eine Auflage (168) für einen Werkstückträger (162) mit einer Mehrzahl von Speicherplätzen umfasst, die zumindest zur Aufnahme von Rohlingen (102) ausgebildet sind.

6. Fertigungssystem (120) nach Anspruch 5,
wobei zumindest ein erster Werkstückträger (162) zur Bereitstellung von Rohlingen (102) und ein zweiter Werkstückträger (162) zur Aufnahme von bearbeiteten Werkstücken (100) oder von Reststücken (106) vorgesehen sind, die gemeinsam in der Handhabungszelle (124) aufnehmbar sind.

7. Fertigungssystem (120) nach einem der Ansprüche 1-6,
wobei die Handhabungszelle (124) zumindest einen Hilfsspeicher (214) aufweist, der insbesondere zur Speicherung von Stichproben ausgebildet ist, und/oder wobei die Handhabungszelle (124) eine Überwachungsstation (216) aufweist, insbesondere eine optische Überwachungsstation (216).

8. Fertigungssystem (120) nach einem der Ansprüche 1-7, wobei die Handhabungszelle (124) zumindest ein Referenzteil (218) zur Ausrichtung von Werkstücken (100) aufweist, insbesondere zur Zentrierung.

9. Fertigungssystem (120) nach einem der Ansprüche 1-8,
wobei zumindest die erste Schnittstelle (170) zwischen der Werkzeugmaschine (10) und der Handhabungszelle (124) mit einer Tür (172) verschließbar ist, insbesondere durch eine Schiebetür.

10. Fertigungssystem (120) nach einem der Ansprüche 1-9,
ferner aufweisend eine Rüstzelle (126) mit einem Handhabungsmanipulator (180), insbesondere in Form eines Rüstroboters,
wobei die Rüstzelle (126) und die Handhabungszelle (124) an einander gegenüberliegenden Seiten an den Arbeitsraum (144) der Werkzeugmaschine (10) angekoppelt sind.

11. Fertigungssystem (120) nach Anspruch 10,
wobei der Handhabungsmanipulator (180) eine Primärfunktion und zumindest eine Sekundärfunktion bereitstellt, wobei die Primärfunktion einen Werkzeugwechsel umfasst, wobei die Sekundärfunktion einen Werkstückwechsel umfasst, und wobei der Handhabungsmanipulator (180) vorzugsweise zumindest eine weitere Sekundärfunktion bereitstellt, die ein Blockrüsten mit einem Werkzeugsatz (192) umfasst.

12. Fertigungssystem (120) nach einem der Ansprüche 10 oder 11,
wobei der Handhabungsmanipulator (180) als SCARA-Roboter (182) gestaltet ist und zwei oder mehr zueinander parallele Schwenkachsen (186) aufweist, und wobei der SCARA-Roboter (182) vorzugsweise entlang einer zu den Schwenkachsen (186) parallel ausgerichteten Achse (178) linear verfahrbar ist.

13. Fertigungssystem (120) nach einem der Ansprüche 1-12, wobei die Werkzeugmaschine (10) Folgendes aufweist:
- einen Gestellblock (18),
- einen Y-Schlitten (28), der an einer Y-Führung an einer Unterseite (34) des Gestellblocks (18) angeordnet und relativ zum Gestellblock (18) horizontal verfahrbar ist,
- einen X-Schlitten (22), der an einer X-Führung an einer Schrägseite (26) des Gestellblocks (18) angeordnet und relativ zum Gestellblock (18) horizontal verfahrbar ist, wobei der Gestellblock (18) als Schrägbett-Gestellblock gestaltet ist, und wobei der X-Schlitten (22) entlang einer X-Achse verfahrbar ist, die senkrecht zu einer Y-Achse orientiert ist, entlang der der Y-Schlitten (28) verfahrbar ist,
- einen Z-Schlitten (32), der an einer Z-Führung an einer Vorderseite des X-Schlittens (22) vertikal verfahrbar ist, und
- einen am Y-Schlitten (28) mittelbar oder unmittelbar aufgenommenen Drehantrieb (40, 42), der einen Tisch (146) mit Werkstückhalter (60) trägt.

14. Fertigungssystem (120) nach einem der Ansprüche 1-13,
wobei die Werkzeugmaschine (10) einer Bearbeitungszelle zugeordnet ist, die von der Handhabungszelle (124) und insbesondere auch von der Rüstzelle (126) getrennt ist.

15. Anlage (250) zur spanenden Fertigung, mit einem Fertigungssystem (120) nach einem der Ansprüche 1-14, und mit einer kombinierten Transfer- und Speichervorrichtung (252), die Folgendes aufweist:
- eine Speicherebene (260), umfassend zwei oder mehr voneinander in einer Längsrichtung (264) beabstandete Speicher (270) mit übereinander angeordneten Speicherplätzen (272) für Werkstückträger (162) zur Aufnahme von Rohlingen (102) oder bearbeiteten Werkstücken (100),
- eine sich in der Längsrichtung (264) erstreckende Transfereinrichtung (300), umfassend insbesondere eine bodenseitige Führung (304) und einen Fahrständer (308), der eine Handhabungseinrichtung (312) trägt,
- zumindest eine neben oder zwischen den Speichern angeordnete Bearbeitungsschnittstelle (328) zur direkten oder mittelbaren Ankopplung einer Werkzeugmaschine (10),
- zumindest eine Beschickungsschnittstelle (280), insbesondere an einer Stirnseite der Vorrichtung (252), die für ein fahrerloses Transportfahrzeug (290) erreichbar ist,
wobei die Transfereinrichtung (300) einen Werkstücktransfer zwischen der Beschickungsschnittstelle (280), der Speicherebene (260) und der zumindest einen Bearbeitungsschnittstelle (328) bewerkstelligt, und
wobei ein Werkstücktransfer zwischen der Vorrichtung (252) und der Werkzeugmaschine (10) mittelbar unter Nutzung einer Handhabungseinheit (150) der Handhabungszelle (124) erfolgt.

## Claims

1. Manufacturing system (120) for machining, in particular for the production of fine mechanical workpieces (100) that comprises the following:
- at least one machine tool (10), which is arranged for multi-axis machining, and which comprises a tool holder (44) and a workpiece holder (60) that are movable relative to each other in four or five axes, wherein three translatory axes (X, Y, Z) and one or two rotary axes (B, C) are provided,
wherein the tool holder (44) and the workpiece holder (60) are arranged at a rear side of a working space (144) of the machine tool (10),
- a handling cell (124) comprising the following:
- a first interface (170) to the machine tool (10), which is laterally coupled to the working space (144),
- a second interface (210) for transfer purposes,
- a handling unit (150), in particular in the form of a handling robot, and
- at least one buffer storage (164, 166),
wherein the handling unit (150) is arranged for an automated workpiece change, **characterized in that**
the handling unit (150) is arranged as a hanging articulated robot (152), whose movement range encompasses the first interface (170), a workpiece transfer position with the workpiece holder (60) and the second interface (210), and
the working space (144) of the machine tool (10) that is defined by the possible travel ranges of the three translatory axes (X, Y, Z) is less than 250 mm x 250 mm x 250 mm.

2. Manufacturing system (120) according to claim 1, wherein the handling unit (150) comprises a primary function and at least one secondary function, wherein the primary function comprises a workpiece change and wherein the secondary function comprises a tool change.

3. Manufacturing system (120) according to claim 1 or 2, wherein the handling unit (150) comprises a double gripper (156), which is at least arranged for picking up blanks (102).

4. Manufacturing system (120) according to one of claims 1-3,
wherein the handling unit (150) comprises a vacuum gripper (158), which is particularly arranged for picking up processed workpieces (100).

5. Manufacturing system (120) according to one of claims 1-4, wherein the buffer storage (164, 166) comprises at least one support (168) for a workpiece carrier (162) with a plurality of storage locations, which are arranged at least for accommodating blanks (102).

6. Manufacturing system (120) according to claim 5, wherein at least a first workpiece carrier (162) for providing blanks (102) and a second workpiece carrier (162) for accommodating machined workpieces (100) or remaining pieces (106) are provided, which can be accommodated together in the handling cell (124).

7. Manufacturing system (120) according to one of claims 1-6,
wherein the handling cell (124) comprises at least one auxiliary storage (214), which is in particular arranged for storing samples, and/or
wherein the handling cell (124) comprises a monitoring station (216), in particular an optical monitoring station (216).

8. Manufacturing system (120) according to one of claims 1-7, wherein the handling cell (124) comprises at least one reference part (218) for alignment of workpieces (100), in particular for centering.

9. Manufacturing system (120) according to one of claims 1-8, wherein at least the first interface (170) between the machine tool (10) and the handling cell (124) is closeable by a door (172), in particular by means of a sliding door.

10. Manufacturing system (120) according to one of claims 1-9, further comprising a setup cell (126) having a handling manipulator (180), in particular in the form of a setup robot, wherein the setup cell (126) and the handling cell (124) are coupled on opposite sides to the working space (144) of the machine tool (10).

11. Manufacturing system (120) according to claim 10, wherein the handling manipulator (180) provides a primary function and at least one secondary function, wherein the primary function comprises a tool change, and wherein the secondary function comprises a workpiece change, and wherein the handling manipulator (180) preferably provides at least another secondary function, which comprises a block setup with a tool kit (192).

12. Manufacturing system (120) according to claim 10 or 11, wherein the handling manipulator (180) is arranged as a SCARA robot (182) and comprises two or more pivoting axes (186) that are parallel to each other, and wherein the SCARA robot (182) is preferably movable linearly along an axis (178) that is oriented parallel to the pivoting axes (186).

13. Manufacturing system (120) according to one of claims 1-12, wherein the machine tool (10) comprises the following:
- a frame block (18),
- a Y-carriage (28), which is arranged at a Y-guide on an underside (34) of the frame block (18), and which is movable horizontally relative to the frame block (18),
- an X-carriage (22), which is arranged at an X-guide on an inclined side (26) of the frame block (18), and which is movable horizontally relative to the frame block (18), wherein the frame block (18) is arranged as an inclined bed frame block, and wherein the X-carriage (22) is movable along an X-axis, which is oriented perpendicular to a Y-axis, along which the Y-carriage (28) is movable,
- a Z-carriage (32), which is arranged on a Z-guide at a front of the X-carriage (22), and which is movable vertically, and
- a rotary drive (40, 42) mounted directly or indirectly on the Y-carriage (28), which supports a table (146) with a workpiece holder (60).

14. Manufacturing system (120) according to one of claims 1-13, wherein the machine tool (10) is assigned to a machining cell, which is separated from the handling cell (124) and in particular also from the setup cell (126).

15. Manufacturing installation (250) for machining, comprising a manufacturing system (120) according to one of claims 1-14, and a combined transfer and storage device (252), which comprises the following:
- a storage level (260), comprising two or more storages (270) that are spaced apart from one another in a longitudinal direction (264) and provided with storage spaces (272), which are arranged one above the other, for workpiece carriers (162) for holding blanks (102) or machined workpieces (100),
- a transfer device (300) extending in the longitudinal direction (264), comprising in particular a ground-side guide (304) and a travelling column (308) carrying a handling device (312),
- at least one machining interface (328), which is arranged adjacent to or between the storages, for direct or indirect coupling with a machine tool (10),
- at least one feeding interface (280), in particular at a front side of the device (252), which is accessible for a driverless transport vehicle (290),
wherein the transfer device (300) accomplishes a workpiece transfer between the feeding interface (280), the storage level (260) and the at least one machining interface (328), and
wherein a workpiece transfer between the device (252) and the machine tool (10) takes place indirectly by using a handling unit (150) of the handling cell (124).

## Revendications

1. Système d'usinage (120) pour l'usinage par enlèvement de matière, en particulier pour la fabrication de pièces (100) de mécanique de précision, présentant ce qui suit :
- au moins une machine-outil (10) qui est conçue pour la transformation multiaxiale et qui présente un porte-outil (44) et un porte-pièce (60) pouvant se déplacer l'un par rapport à l'autre selon quatre ou cinq axes, dans lequel trois axes de translation (X, Y, Z) et un ou deux axes de rotation (B, C) sont prévus,
dans lequel le porte-outil (44) et le porte-pièce (60) sont montés sur un côté arrière d'un espace de travail (144) de la machine-outil (10),
- une cellule de manipulation (124) présentant ce qui suit :
- une première interface (170) avec la machine-outil (10) qui se raccorde latéralement à l'espace de travail (144),
- une seconde interface (210) destinée au transfert,
- une unité de manipulation (150), en particulier sous la forme d'un robot de manipulation, et
- au moins un moyen de stockage tampon (164, 166),
dans lequel l'unité de manipulation (150) est conçue pour un changement automatisé de pièce,
**caractérisé en ce que**
l'unité de manipulation (150) est conçue sous la forme d'un robot à bras articulé suspendu (152), dont la plage de mouvement comprend la première interface (170), une position de transfert de pièce avec le porte-pièce (60) et la seconde interface (210), et
l'espace de travail (144) de la machine-outil (10), défini par les courses de déplacement possibles des trois axes de translation (X, Y, Z), est inférieur à 250 mm × 250 mm × 250 mm.

2. Système d'usinage (120) selon la revendication 1,
dans lequel l'unité de manipulation (150) fournit une fonction principale et au moins une fonction secondaire, dans lequel la fonction principale comprend un changement de pièce et dans lequel la fonction secondaire comprend un changement d'outil.

3. Système d'usinage (120) selon la revendication 1 ou 2,
dans lequel l'unité de manipulation (150) présente un double moyen de préhension (156) qui est conçu au moins pour saisir des ébauches (102).

4. Système d'usinage (120) selon l'une des revendications 1 à 3,
dans lequel l'unité de manipulation (150) présente un moyen de préhension à ventouse (158) qui est conçu en particulier pour recevoir des pièces (100) transformées.

5. Système de fabrication (120) selon l'une des revendications 1 à 4,
dans lequel le moyen de stockage tampon (164, 166) comprend au moins un support (168) pour un porte-pièce (162) comportant une pluralité d'emplacements de stockage conçus au moins pour recevoir des ébauches (102).

6. Système d'usinage (120) selon la revendication 5,
dans lequel au moins un premier porte-pièce (162) permettant de fournir des ébauches (102) et un second porte-pièce (162) permettant de recevoir des pièces (100) transformées ou des chutes (106) sont prévus, lesquels peuvent être reçus conjointement dans la cellule de manipulation (124).

7. Système d'usinage (120) selon l'une des revendications 1 à 6,
dans lequel la cellule de manipulation (124) présente au moins un moyen de stockage auxiliaire (214) qui est conçu en particulier pour stocker des échantillons, et/ou
dans lequel la cellule de manipulation (124) présente un poste de surveillance (216), en particulier un poste de surveillance optique (216).

8. Système d'usinage (120) selon l'une des revendications 1 à 7, dans lequel la cellule de manipulation (124) présente au moins une pièce de référence (218) pour l'alignement des pièces (100), en particulier pour leur centrage.

9. Système d'usinage (120) selon l'une des revendications 1 à 8,
dans lequel au moins la première interface (170) entre la machine-outil (10) et la cellule de manipulation (124) peut être fermée par une porte (172), en particulier par une porte coulissante.

10. Système d'usinage (120) selon l'une des revendications 1 à 9,
présentant en outre une cellule de préparation (126) comportant un moyen manipulateur de manipulation (180), en particulier sous la forme d'un robot de préparation,
dans lequel la cellule de préparation (126) et la cellule de manipulation (124) sont accouplées à l'espace de travail (144) de la machine-outil (10) sur des côtés opposés l'un à l'autre.

11. Système d'usinage (120) selon la revendication 10,
dans lequel le moyen manipulateur de manipulation (180) assure une fonction principale et au moins une fonction secondaire, dans lequel la fonction principale comprend un changement d'outil, dans lequel la fonction secondaire comprend un changement de pièce, et
dans lequel le moyen manipulateur de manipulation (180) fournit de préférence au moins une autre fonction secondaire qui comprend la préparation en bloc avec un jeu d'outils (192).

12. Système d'usinage (120) selon l'une des revendications 10 ou 11,
dans lequel le moyen manipulateur de manipulation (180) est conçu comme un robot SCARA (182) et présente deux axes de pivotement (186) ou plus parallèles entre eux, et
dans lequel le robot SCARA (182) peut de préférence se déplacer linéairement le long d'un axe (178) orienté parallèlement aux axes de pivotement (186).

13. Système d'usinage (120) selon l'une des revendications 1 à 12, dans lequel la machine-outil (10) présente les éléments suivants :
- un bloc de châssis (18),
- un chariot Y (28) qui est monté sur un guide Y au niveau d'un côté inférieur (34) du bloc de châssis (18) et qui peut se déplacer horizontalement par rapport au bloc de châssis (18),
- un chariot X (22) qui est disposé sur un guide X au niveau d'un côté incliné (26) du bloc de châssis (18) et qui peut se déplacer horizontalement par rapport au bloc de châssis (18), dans lequel le bloc de châssis (18) est conçu comme un bloc de châssis à banc incliné, et dans lequel le chariot X (22) peut se déplacer le long d'un axe X orienté perpendiculairement à un axe Y, le long duquel le chariot Y (28) peut se déplacer,
- un chariot Z (32) qui peut se déplacer verticalement le long d'un guide Z sur un côté avant du chariot X (22), et
- un entraînement rotatif (40, 42) reçu directement ou indirectement sur le chariot en Y (28) et soutenant une table (146) comportant un porte-pièce (60).

14. Système d'usinage (120) selon l'une des revendications 1 à 13,
dans lequel la machine-outil (10) est associée à une cellule de transformation qui est séparée de la cellule de manipulation (124) et, en particulier, de la cellule de préparation (126).

15. Installation (250) pour l'usinage par enlèvement de copeaux, comportant un système d'usinage (120) selon l'une des revendications 1 à 14, et comportant un dispositif combiné de transfert et de stockage (252) qui présente les éléments suivants :
- un niveau de stockage (260) comprenant deux moyens de stockage (270) ou plus espacés les uns des autres dans une direction longitudinale (264) et comportant des emplacements de stockage (272) superposés pour des porte-pièces (162) pour la réception d'ébauches (102) ou de pièces (100) transformées,
- un appareil de transfert (300) s'étendant dans la direction longitudinale (264), comprenant en particulier un guide côté sol (304) et un montant mobile (308) qui soutient un appareil de manipulation (312),
- au moins une interface de transformation (328) disposée à côté des moyens de stockage ou entre ceux-ci et destinée au raccordement direct ou indirect d'une machine-outil (10),
- au moins une interface de chargement (280), en particulier sur un côté frontal du dispositif (252), qui est accessible à un véhicule de transport sans conducteur (290),
dans lequel l'appareil de transfert (300) assure le transfert de pièces entre l'interface de chargement (280), le niveau de stockage (260) et l'au moins une interface de transformation (328), et
dans lequel le transfert de pièces entre le dispositif (252) et la machine-outil (10) est effectué indirectement à l'aide d'une unité de manipulation (150) de la cellule de manipulation (124).
